# EUROPEAN PATENT APPLICATION

(11) **EP 4 693 170 A1**
(43) Date of publication of application: **11.02.2026**
(21) Application number: 24778971.2
(22) Date of filing: 27.02.2024
(51) Int. Cl.: G06T 5/60, G06T 7/00, G06N 3/0475, G06V 10/778, G06V 10/82, H04N 23/617, H04N 23/80, H04N 23/81

(54) **INFORMATION PROCESSING DEVICE, INFORMATION PROCESSING METHOD, AND PROGRAM**

(30) Priority: 30.03.2023 JP 2023055010
(71) Applicant: Sony Group Corporation, Tokyo 108-0075 (JP)
(72) Inventor: YOSHIMURA, Masakazu, Tokyo 108-0075 (JP); OTSUKA, Junji, Tokyo 108-0075 (JP); IRIE, Atsushi, Tokyo 108-0075 (JP); HOSHIKAWA, Leo, Tokyo 108-0075 (JP)
(74) Representative: MFG Patentanwälte Meyer-Wildhagen Meggle-Freund Gerhard PartG mbB
(86) International application number: PCT/JP2024/007099
(87) International publication number: WO 2024/202830

(57) **Abstract**

[Problem] To more easily realize image capturing and transformation according to the user's preferences.

[Solution] Provided is an information processing apparatus that includes a collection unit that collects user's feedback on an analysis result of an image, and a control unit that controls parameters related to at least one of acquisition and transformation of the image based on the user's feedback collected by the collection unit.

## Description

### [Technical Field]

The present disclosure relates to an information processing apparatus, an information processing method, and a program.

### [Background Art]

In recent years, technologies have been developed to support capturing or transforming images in accordance with user preferences. For example, PTL 1 discloses a technology for controlling parameters of a neural network that performs image processing based on user instructions given via voice.

### [Citation List]

### [Patent Literatures]

[PTL 1]
WO 2021/229926

### [Summary]

### [Technical Problem]

However, in the technology disclosed in PTL 1, it is required for the user to provide instructions from scratch. Moreover, there may be cases where it is difficult for the user to give appropriate instructions.

### [Solution to problem]

According to one aspect of the present disclosure, there is provided an information processing apparatus including: a collection unit that collects user's feedback on an analysis result of an image; and a control unit that controls parameters related to at least one of acquisition and transformation of the image based on the user's feedback collected by the collection unit.

According to another aspect of the present disclosure, there is provided an information processing method including causing a processor to execute: collecting user's feedback on an analysis result of an image, and controlling parameters related to at least one of acquisition and transformation of the image based on the collected user's feedback.

According to still another aspect of the present disclosure, there is provided a program for causing a computer to function as an information processing apparatus including: a collection unit that collects user's feedback on an analysis result of an image; and a control unit that controls parameters related to at least one of acquisition and transformation of the image based on the user's feedback collected by the collection unit.

### [Brief Description of Drawings]

[Fig. 1]

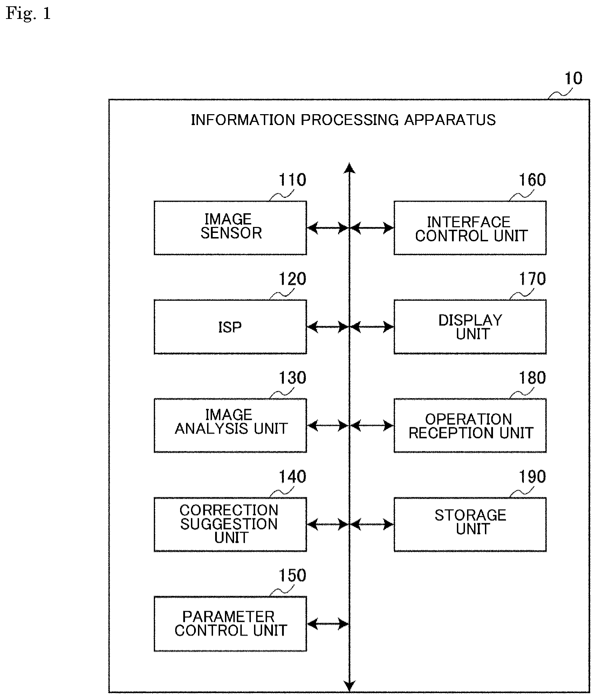

   Fig. 1 is a block diagram illustrating a functional configuration example of an information processing apparatus 10 according to a first embodiment of the present disclosure.
[Fig. 2]

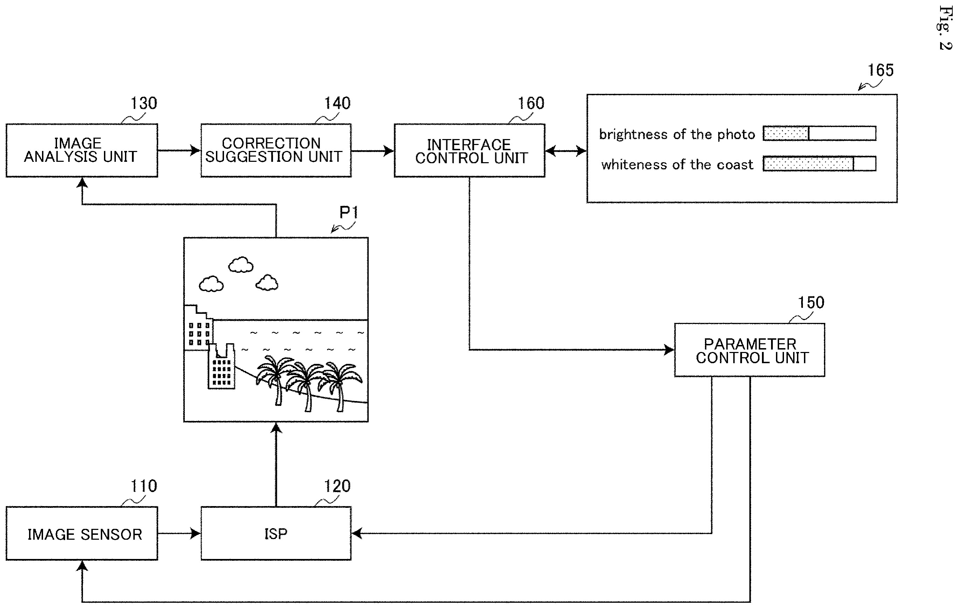

   Fig. 2 is a diagram for explaining an overview of the functions of the information processing apparatus 10 according to the embodiment.
[Fig. 3]

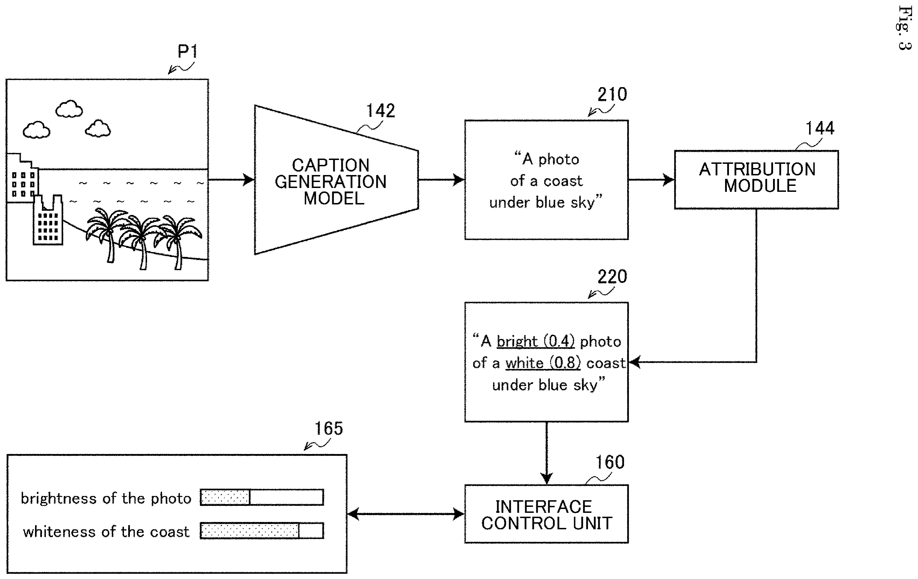

   Fig. 3 is a diagram for explaining a correction suggestion according to the embodiment.
[Fig. 4]

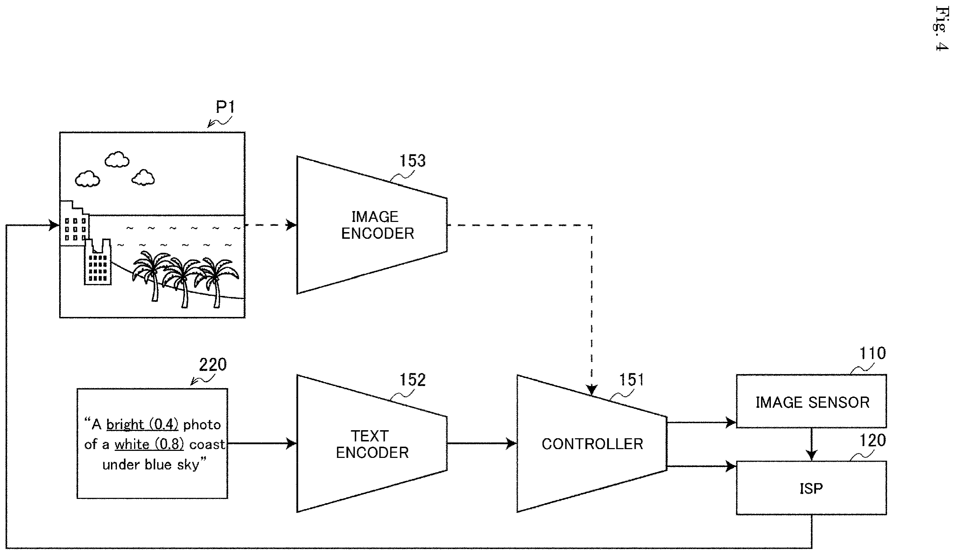

   Fig. 4 is a diagram for explaining parameter control based on estimation using a machine learning model according to the embodiment.
[Fig. 5]

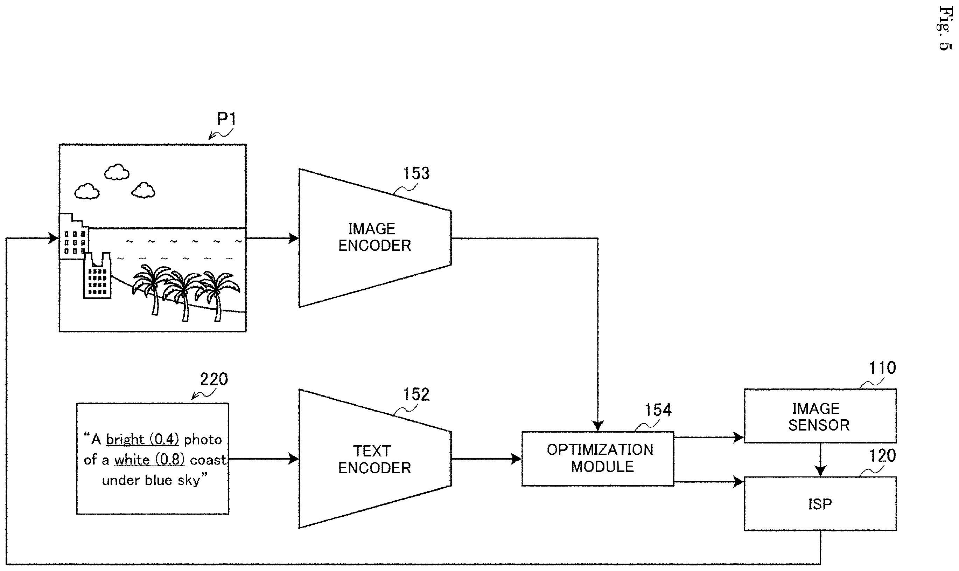

   Fig. 5 is a diagram for explaining parameter control using an optimization module 154 according to the embodiment.
[Fig. 6]

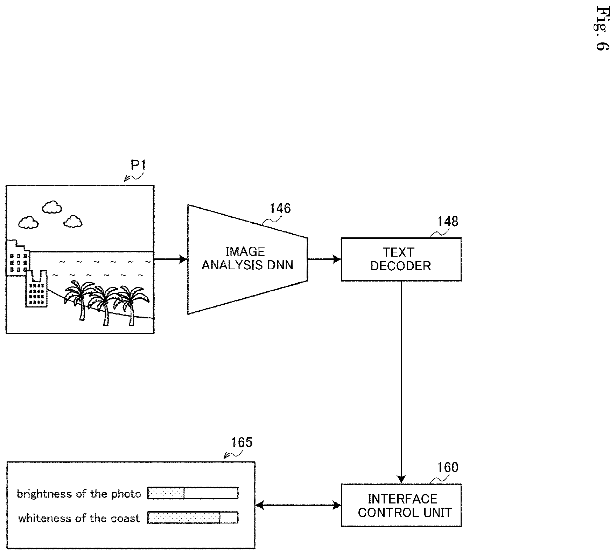

   Fig. 6 is a diagram for explaining a correction suggestion using an image analysis DNN 146 and a text decoder 148 according to the embodiment.
[Fig. 7]

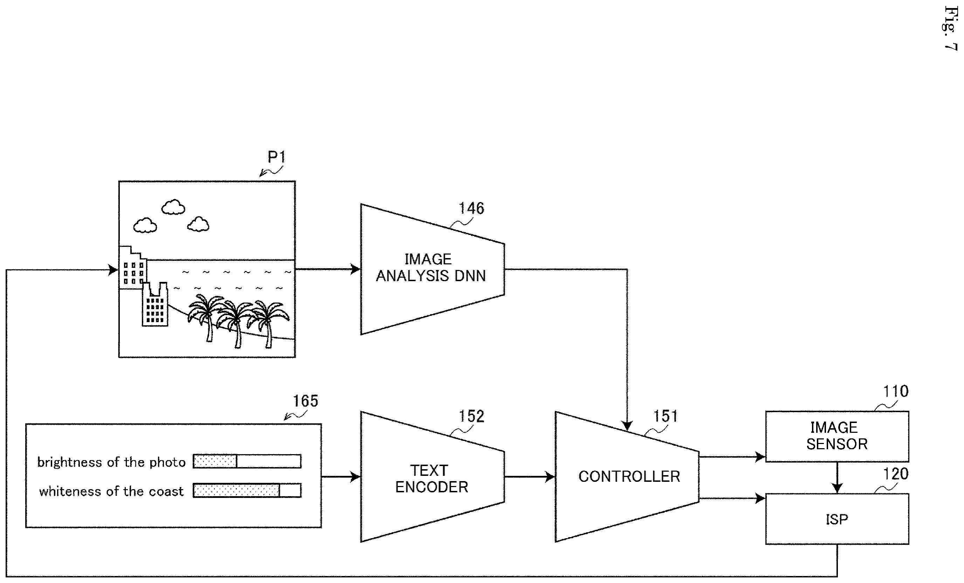

   Fig. 7 is a diagram for explaining parameter control by the image analysis DNN 146 and the text decoder 148 according to the embodiment.
[Fig. 8]

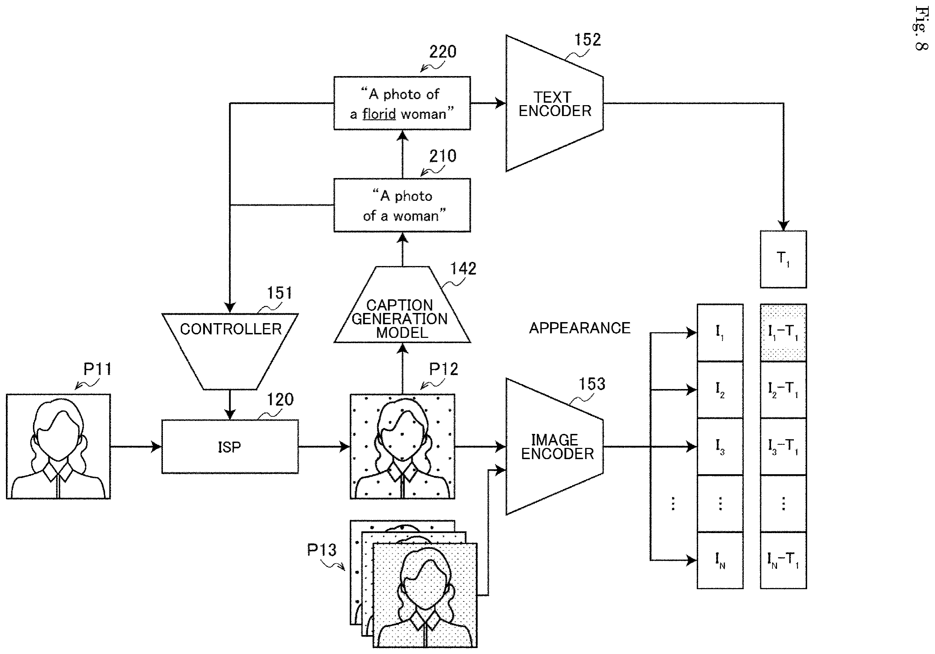

   Fig. 8 is a diagram for explaining the training of a controller 151 using a pretrained CLIP model and a caption generation model 142 according to the embodiment.
[Fig. 9]

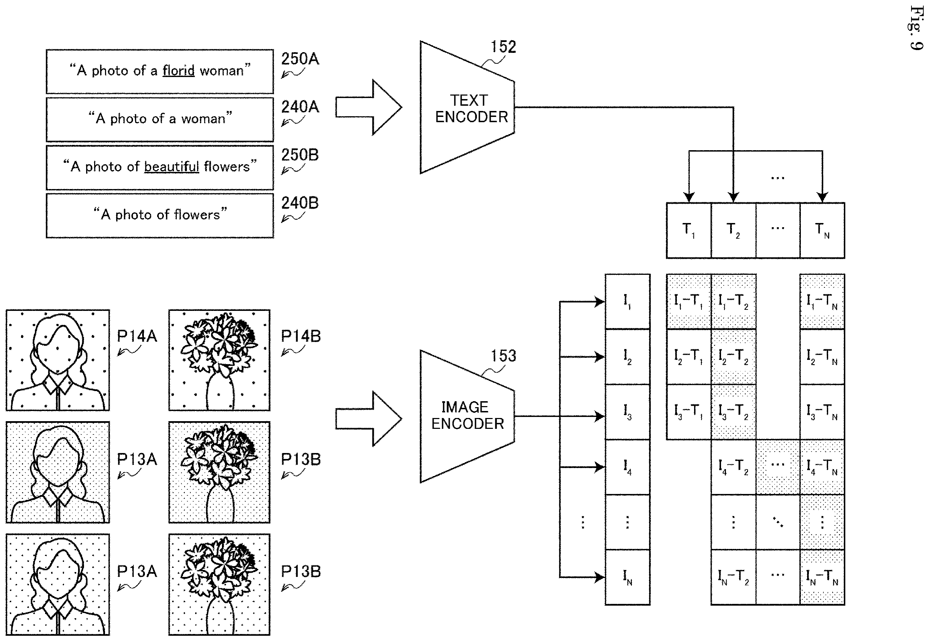

   Fig. 9 is a diagram for explaining a method of causing a CLIP model to learn adjective prompts according to the embodiment.
[Fig. 10]

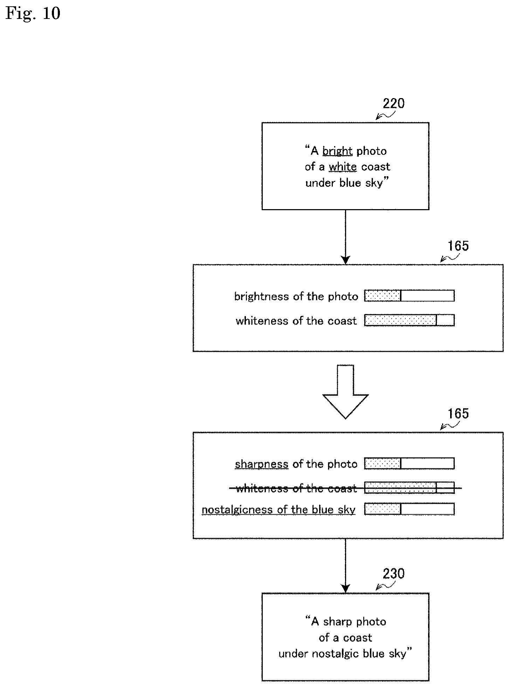

   Fig. 10 is a diagram for explaining the changes, additions, and deletions of captions according to the embodiment.
[Fig. 11]

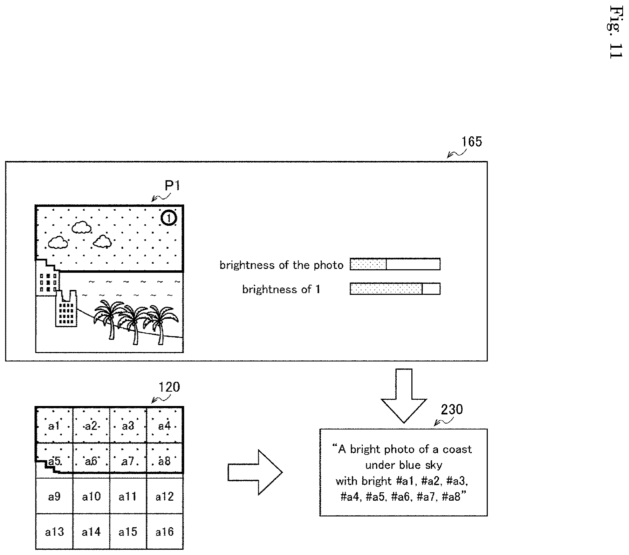

   Fig. 11 is a diagram for explaining feedback related to the specification of image regions subject to parameter control according to the embodiment.
[Fig. 12]

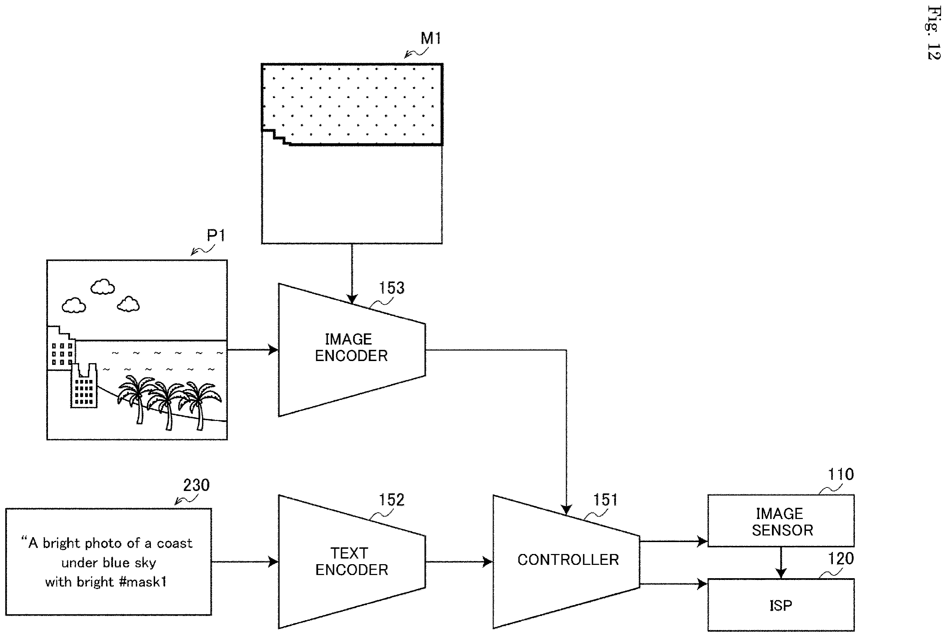

   Fig. 12 is a diagram for explaining feedback related to the specification of image regions subject to parameter control according to the embodiment.
[Fig. 13]

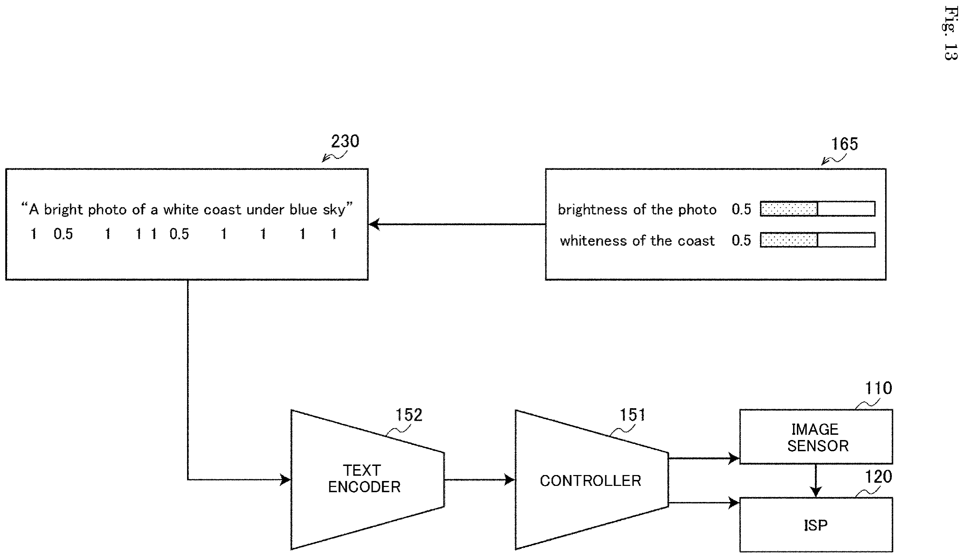

   Fig. 13 is a diagram for explaining feedback including changes in the contribution degree of text elements included in a caption according to the embodiment.
[Fig. 14]

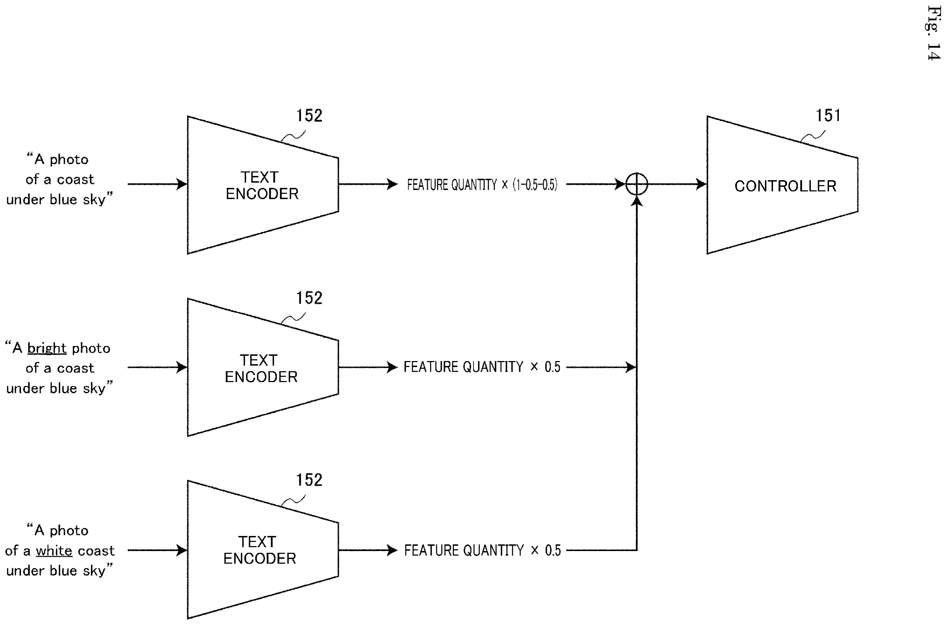

   Fig. 14 is a diagram for explaining the interpolation of feature quantities according to the embodiment.
[Fig. 15]

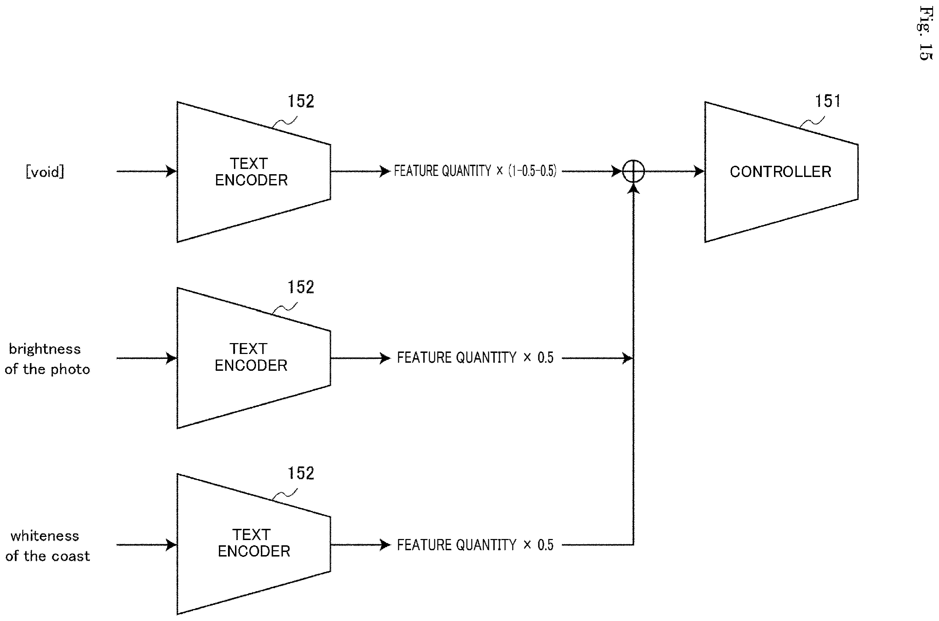

   Fig. 15 is a diagram for explaining the interpolation of feature quantities according to the embodiment.
[Fig. 16]

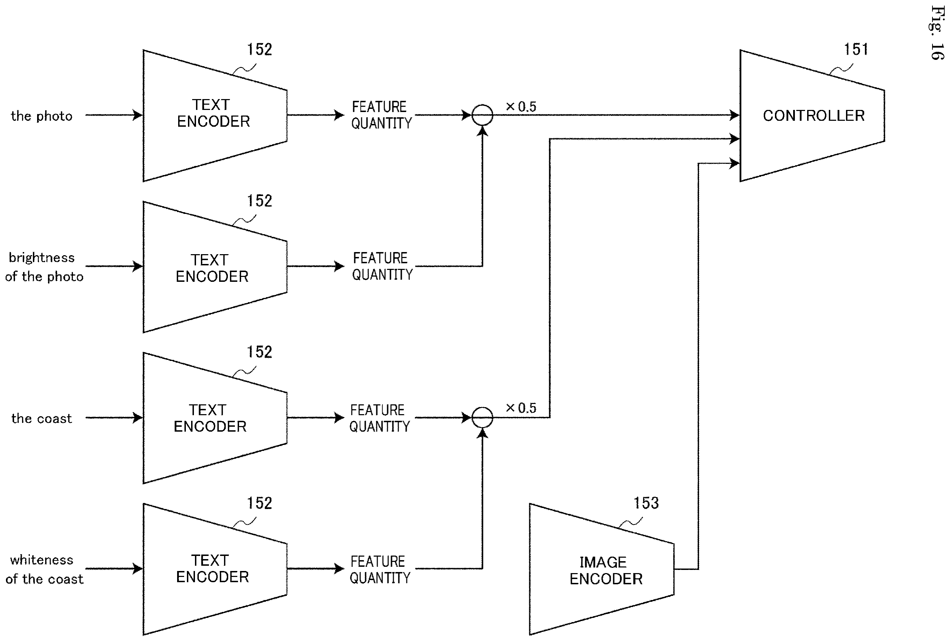

   Fig. 16 is a diagram for explaining the interpolation of feature quantities according to the embodiment.
[Fig. 17]

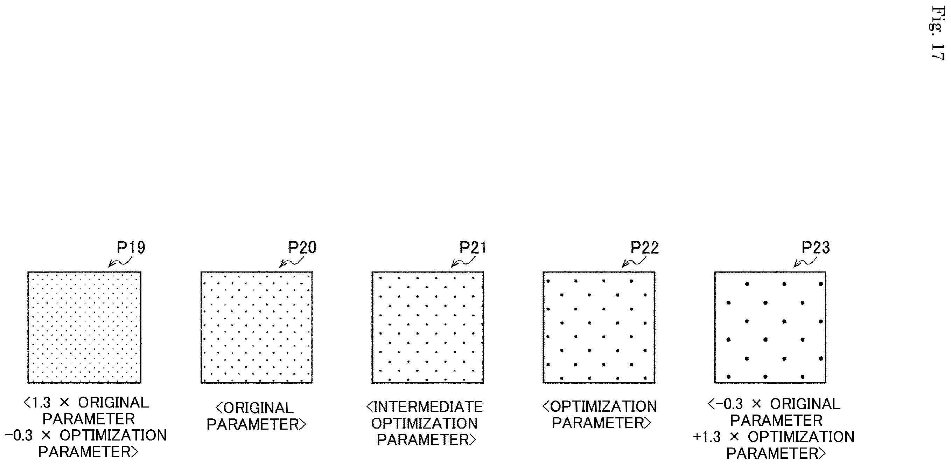

   Fig. 17 is a diagram for explaining parameter control based on presentation of images generated during an iteration process and a selected image according to the embodiment.
[Fig. 18]

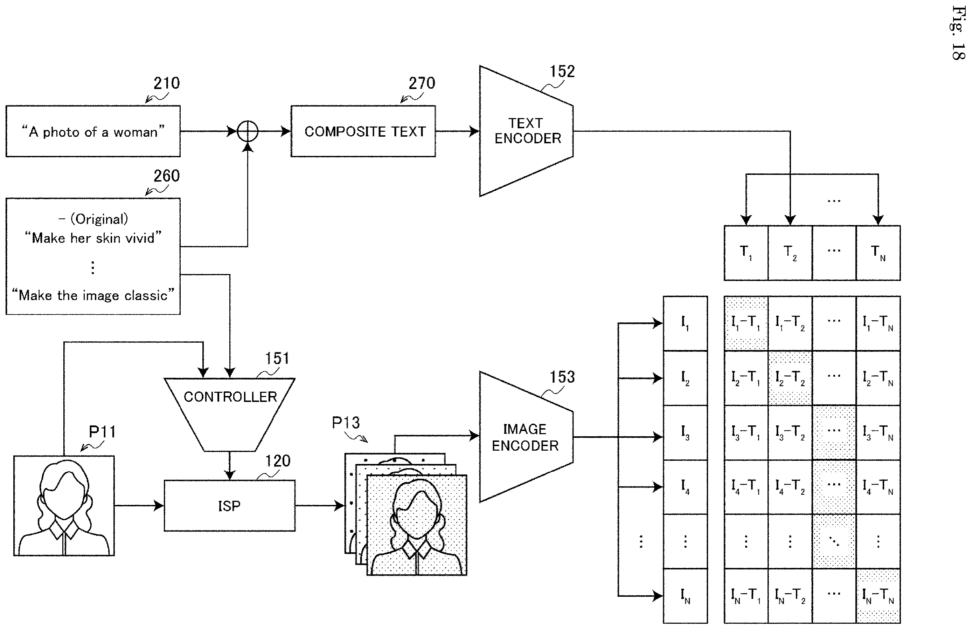

   Fig. 18 is a diagram for explaining the training of parameter control based on direct instructions according to the embodiment. A pretrained CLIP model is used for the training.
[Fig. 19]

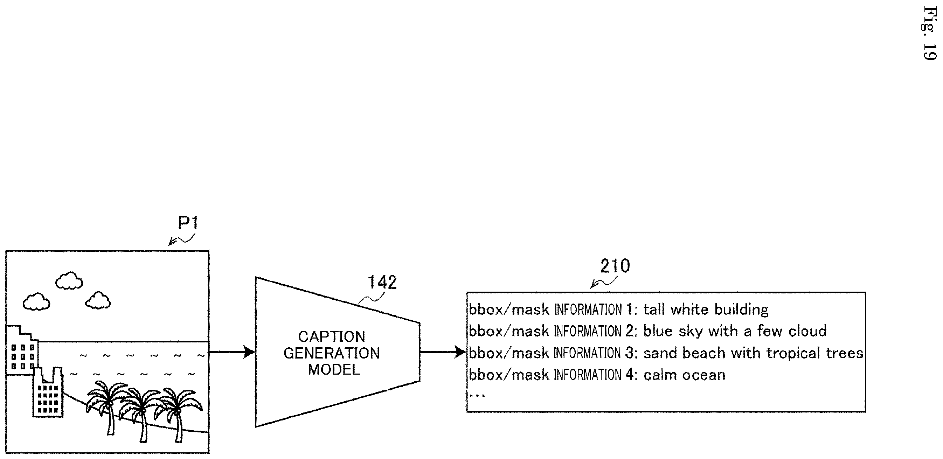

   Fig. 19 is a diagram for explaining the generation of an original caption 210 using Dense Captioning according to the embodiment.
[Fig. 20]

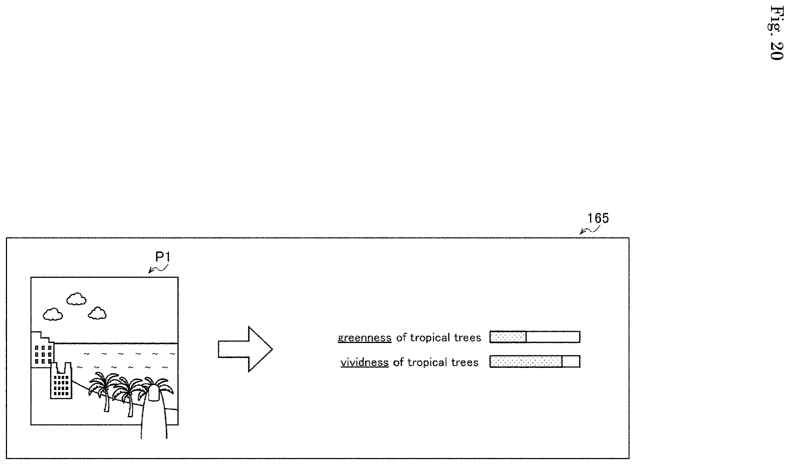

   Fig. 20 is a diagram for explaining feedback using Dense Captioning according to the embodiment.
[Fig. 21]

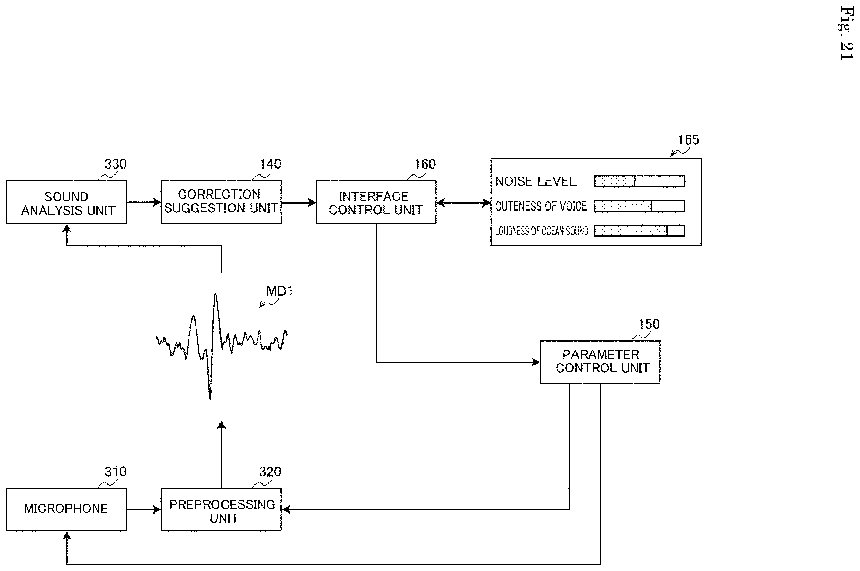

   Fig. 21 is a diagram for describing the collection of acoustic data related to a reflected sound, according to the embodiment.
[Fig. 22]

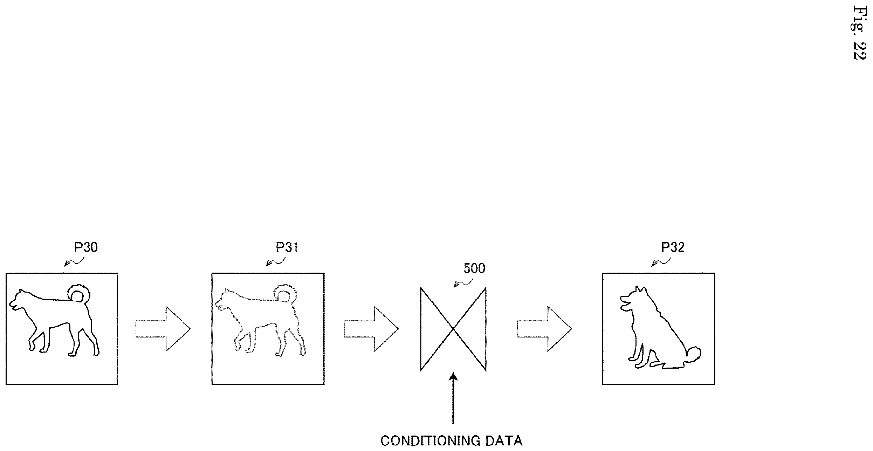

   Fig. 22 is a diagram for explaining an overview of image generation using a generative model 500.
[Fig. 23]

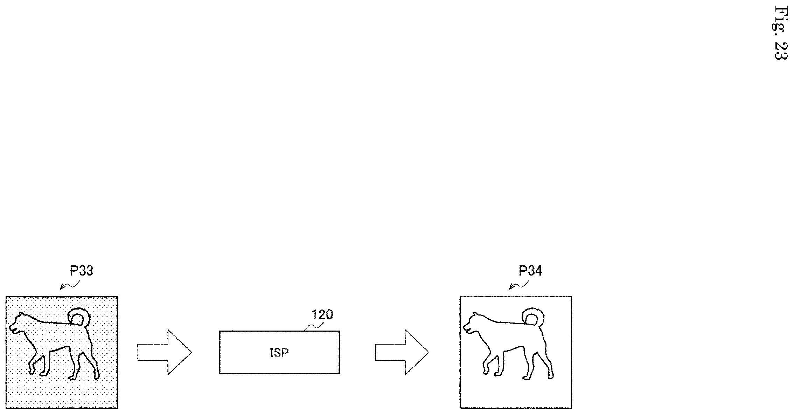

   Fig. 23 is a diagram for explaining image transformation by the ISP 120.
[Fig. 24]

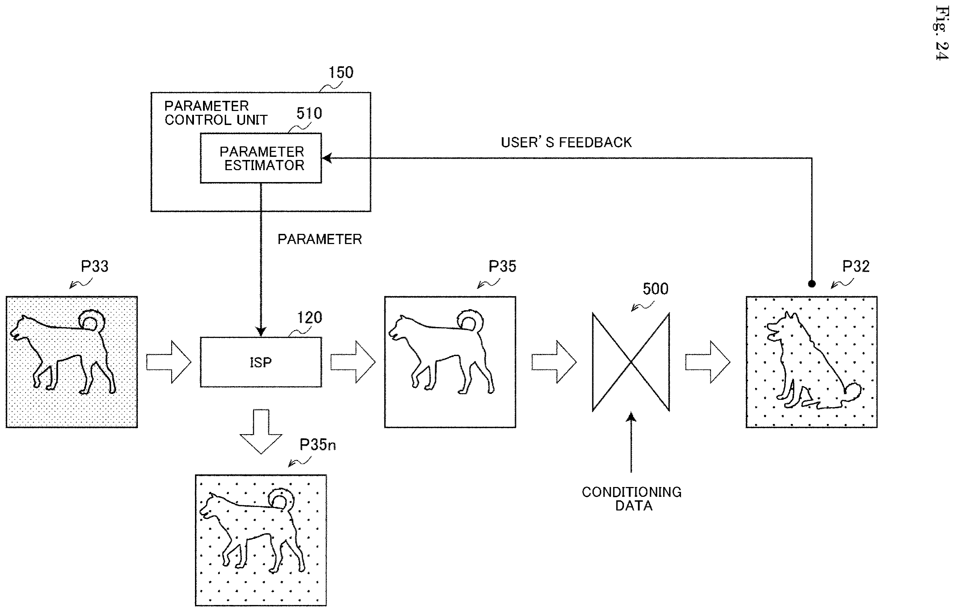

   Fig. 24 is a diagram for explaining an overview of a second embodiment of the present disclosure.
[Fig. 25]

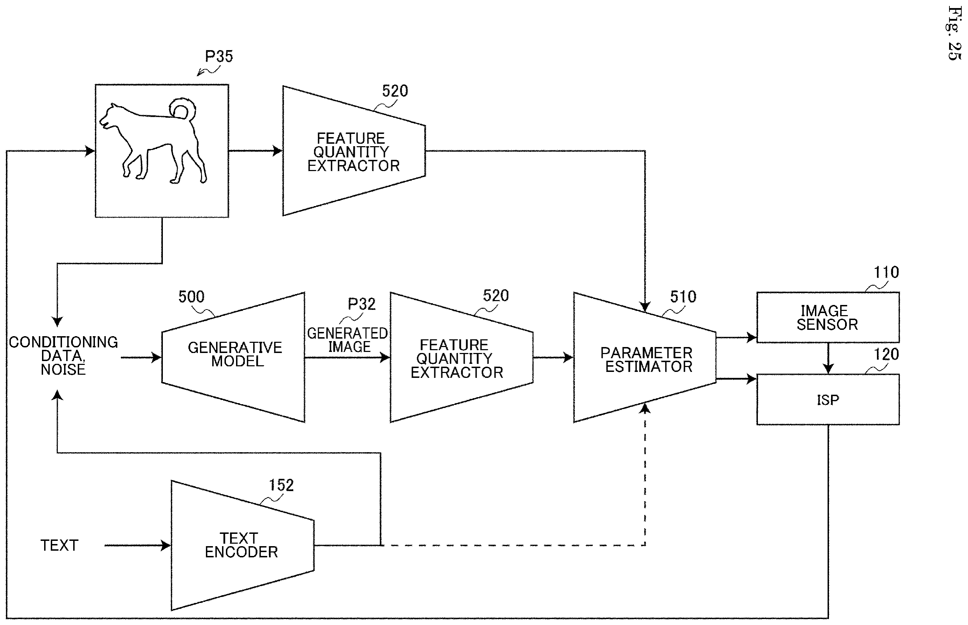

   Fig. 25 is a diagram for explaining differences in the functional configuration of the second embodiment of the present disclosure compared to the first embodiment.
[Fig. 26]

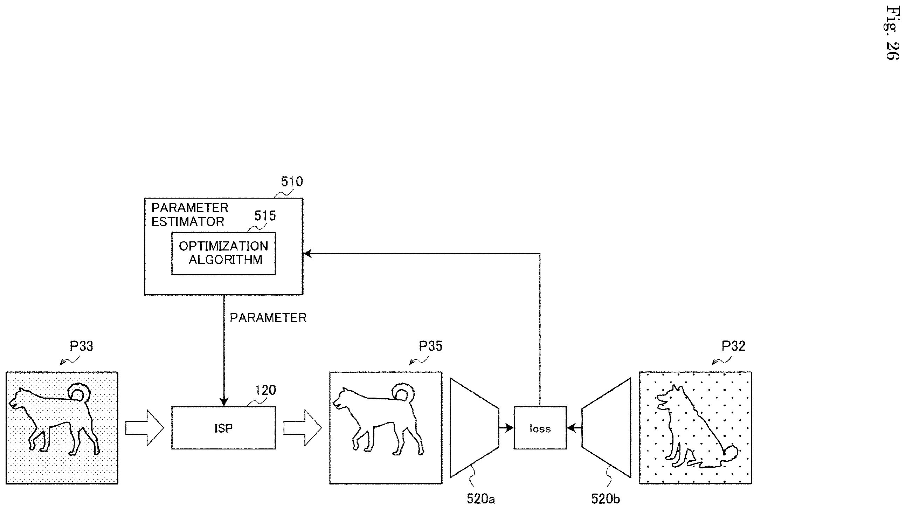

   Fig. 26 is a diagram for explaining estimation of ISP parameters using an optimization algorithm 515 according to the second embodiment of the present disclosure.
[Fig. 27]

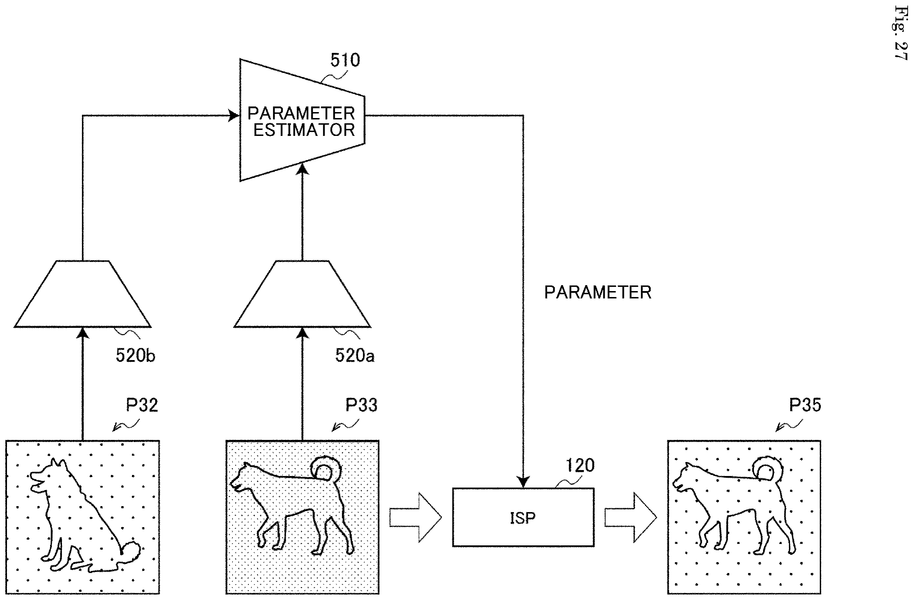

   Fig. 27 is a diagram for explaining estimation of ISP parameters based on the learning of an inference model according to the embodiment.
[Fig. 28]

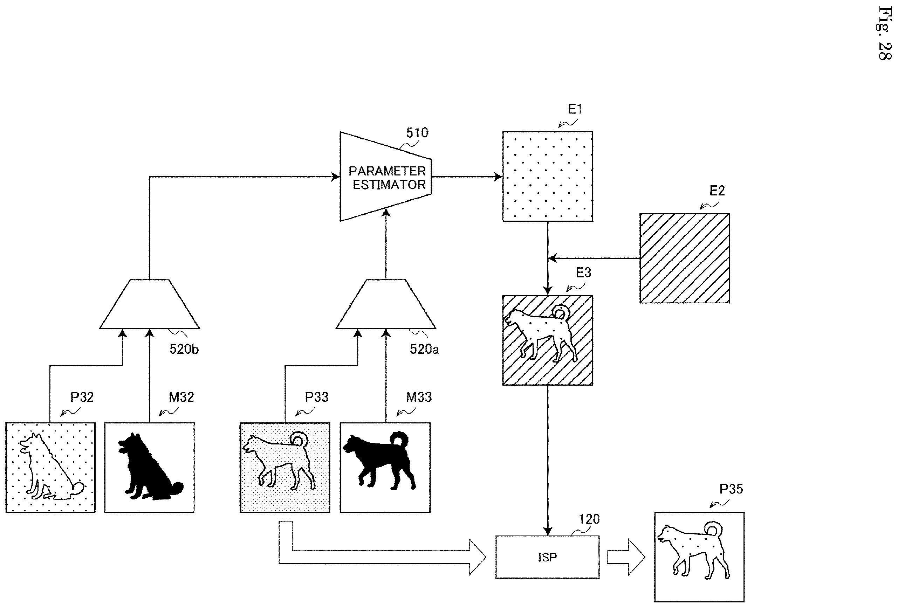

   Fig. 28 is a diagram for explaining control of ISP parameter application regions according to the embodiment.
[Fig. 29]

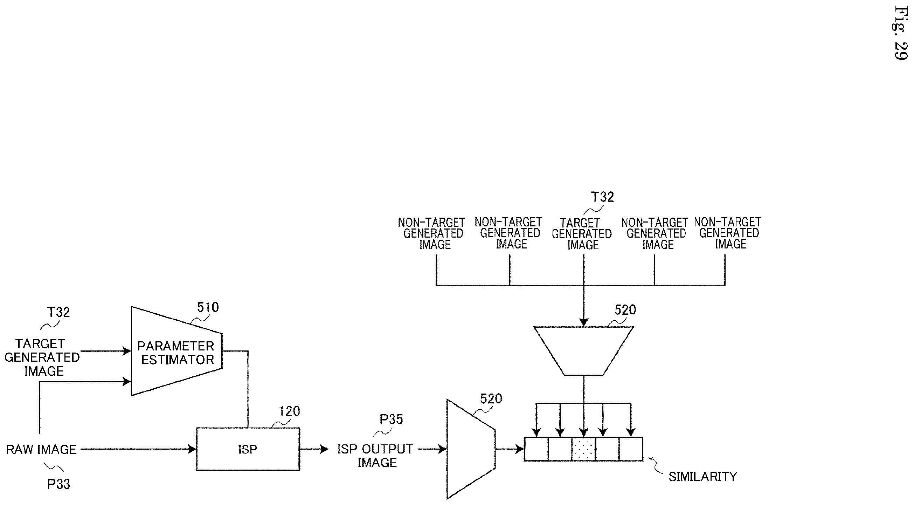

   Fig. 29 is a diagram for explaining contrastive learning according to the embodiment.
[Fig. 30]

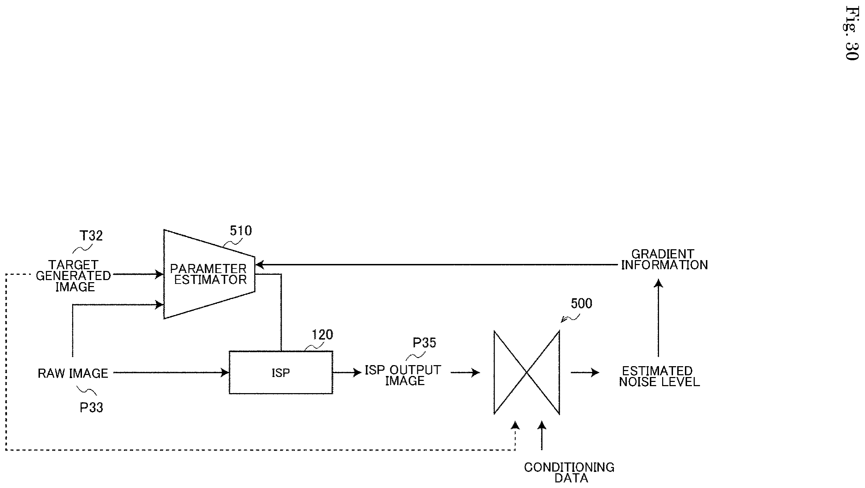

   Fig. 30 is a diagram for explaining construction of a parameter estimator 510 using Score Distillation according to the embodiment.
[Fig. 31]

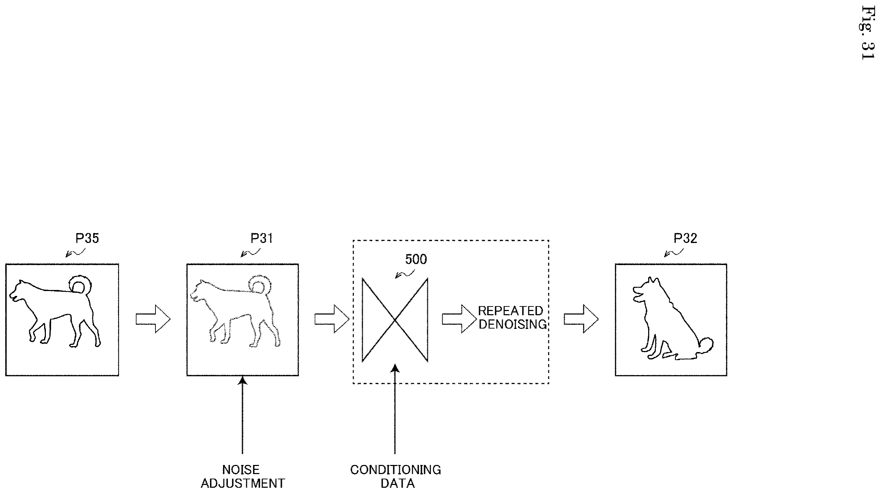

   Fig. 31 is a diagram for explaining conditioning using a noise-added image P31 according to the embodiment.
[Fig. 32]

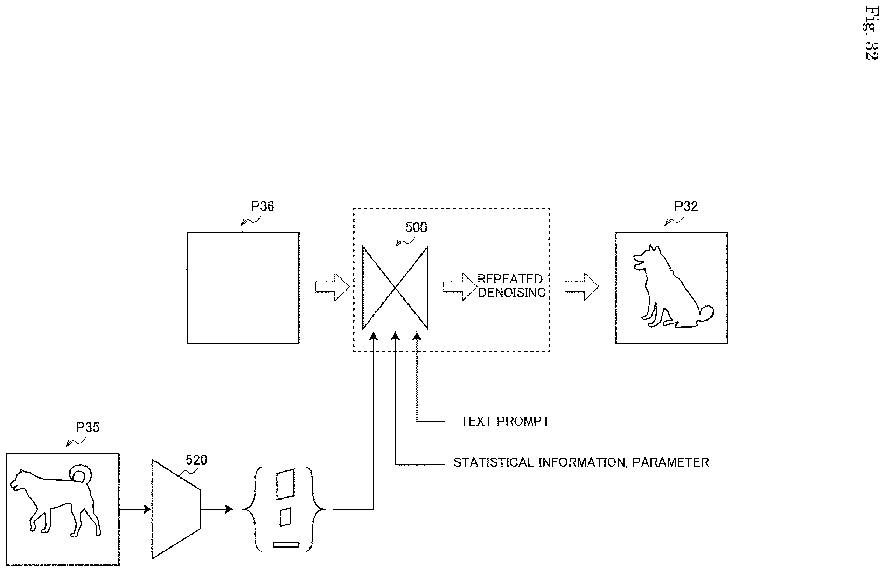

   Fig. 32 is a diagram for explaining conditioning of the generative model 500 using conditioning data according to the embodiment.
[Fig. 33]

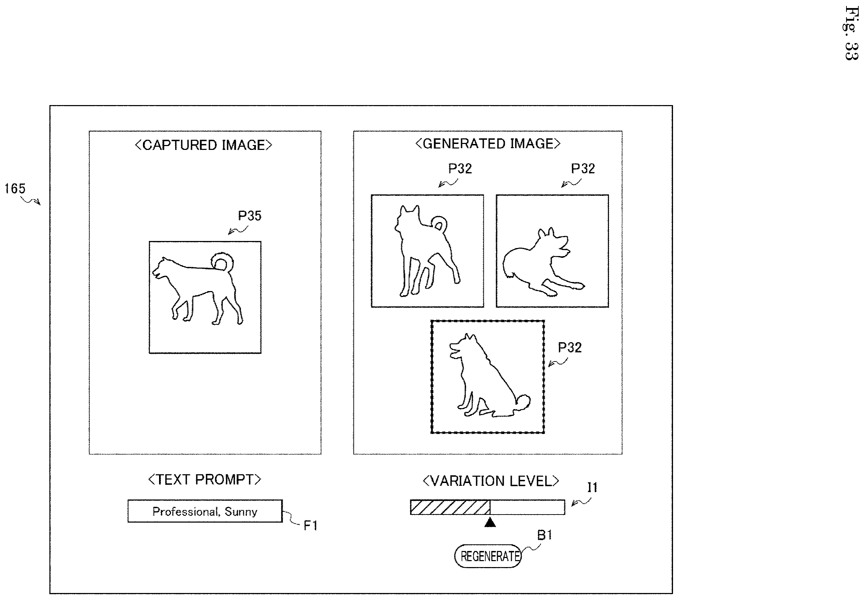

   Fig. 33 is a diagram showing an example of an interface 165 controlled by an interface control unit 160 according to the embodiment.
[Fig. 34]

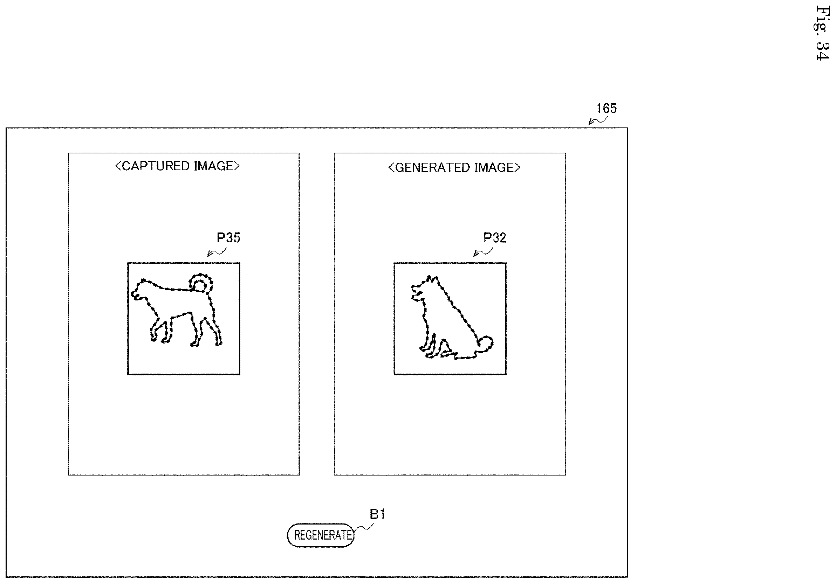

   Fig. 34 is a diagram showing an example of an interface 165 controlled by an interface control unit 160 according to the embodiment.
[Fig. 35]

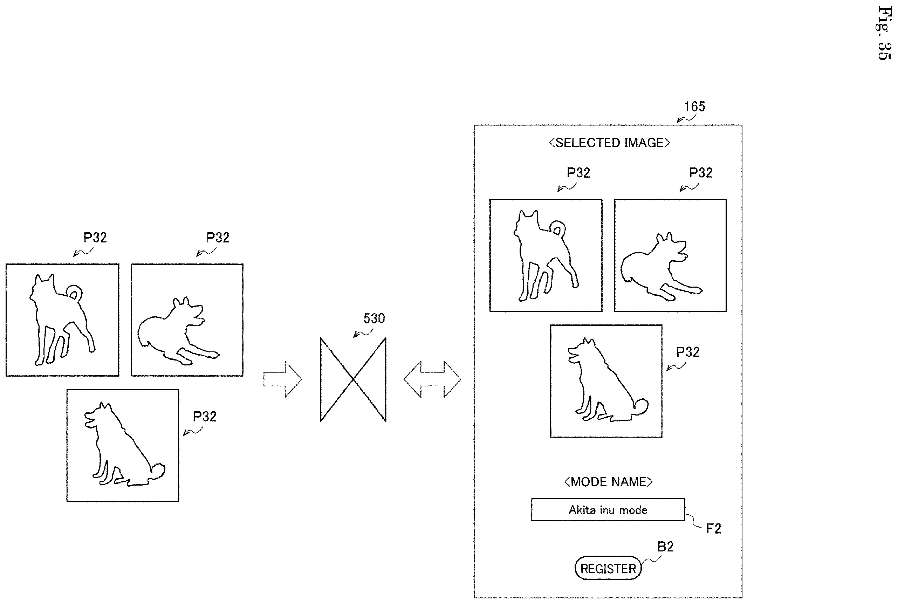

   Fig. 35 is a diagram for explaining the interface 165 related to fine-tuning according to the embodiment.
[Fig. 36]

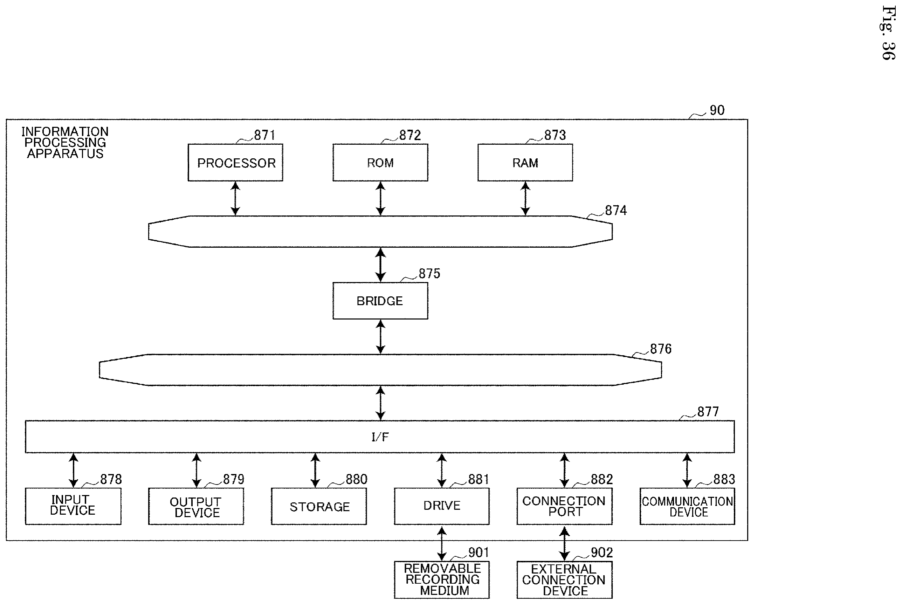

   Fig. 36 is a block diagram showing an example of a hardware configuration of the information processing apparatus 90 according to an embodiment of the present disclosure.

### [Description of Embodiments]

Preferred embodiments of the present disclosure will be described in detail with reference to the accompanying drawings below. Note that in the present specification and the drawings, components having substantially the same functional configurations will be denoted by the same reference numerals, and repeated descriptions thereof will be omitted.

Also, in the present specification and drawings, in cases where a plurality of components of the same type are to be distinguished from each other in explanation, an alphabet or the like may be appended to the end of the reference numerals. On the other hand, in cases where such distinction is not necessary, the alphabet or the like may be omitted, and a description common to all such components may be given.

The descriptions will be given in the following order.
1. First embodiment
   1.1. Functional configuration example
   1.2. Overview of functions
   1.3. Correction suggestion
   1.4. Parameter control
   1.5. Feedback
   1.6. Modifications
2. Second embodiment
   2.1. Overview
   2.2. Functional configuration example
   2.3. Parameter estimation
   2.4. Conditioning of generative model 500
   2.5. Interface example
3. Hardware configuration example
4. Conclusion

### <1. First embodiment>

### <<1.1. Functional configuration example>>

First, the functional configuration example of an information processing apparatus 10 according to the first embodiment of the present disclosure will be described.

Fig. 1 is a block diagram illustrating the functional configuration example of the information processing apparatus 10 according to the first embodiment of the present disclosure.

As shown in Fig. 1, the information processing apparatus 10 according to the present embodiment may include an image sensor 110, an image signal processor (ISP) 120, an image analysis unit 130, a correction suggestion unit 140, a parameter control unit 150, an interface control unit 160, a display unit 170, an operation reception unit 180, and a storage unit 190.

### (Image sensor 110)

The image sensor 110 according to the present embodiment includes various types of sensors that perform image capturing. Examples of such sensors include a charge-coupled device (CCD) image sensor and a complementary metal oxide semiconductor (CMOS) image sensor.

### (ISP 120)

The ISP 120 according to the present embodiment is a processor that processes captured images. The ISP 120 may include a neural network.

### (Image analysis unit 130)

The image analysis unit 130 according to the present embodiment performs various analyses on images.

The image analysis unit 130 according to the present embodiment may, for example, analyze the image and output a caption for the image. Details regarding the caption according to the present embodiment will be described later.

### (Correction suggestion unit 140)

The correction suggestion unit 140 according to the present embodiment suggests corrections related to parameter control of the image.

For example, the correction suggestion unit 140 according to the present embodiment may suggest corrections to the caption output by the image analysis unit 130.

### (Parameter control unit 150)

The parameter control unit 150 according to the present embodiment controls parameters related to at least one of acquisition and transformation (editing) of an image based on user's feedback on the image analysis results.

The image analysis results include captions.

The parameter control unit 150 according to the present embodiment may, for example, control parameters related to at least one of the image sensor 110 and the ISP 120 based on user's feedback on the caption.

More specifically, the parameter control unit 150 according to the present embodiment may, for example, control parameters based on feature quantities extracted from a caption in which the feedback has been reflected.

### (Interface control unit 160)

The interface control unit 160 according to the present embodiment is an example of a collection unit that collects user's feedback on the image analysis results.

The interface control unit 160 according to the present embodiment controls an interface used to present the image analysis results and to receive user's feedback on the analysis results.

### (Display unit 170)

The display unit 170 according to the present embodiment displays visual information. To this end, the display unit 170 includes various types of displays.

For example, the display unit 170 according to the present embodiment displays captions and the like in accordance with the control by the interface control unit 160.

### (Operation reception unit 180)

The operation reception unit 180 according to the present embodiment receives various operations from the user.

The operation reception unit 180 according to the present embodiment includes, for example, input devices such as a touch panel, a mouse, a keyboard, buttons, levers, switches, and a microphone.

### (Storage unit 190)

The storage unit 190 according to the present embodiment stores information used by, or output from, each component of the information processing apparatus 10.

The functional configuration example of the information processing apparatus 10 according to the present embodiment has been described. It is to be noted that the functional configuration described above with reference to Fig. 1 is merely an example, and the functional configuration of the information processing apparatus 10 according to the present embodiment is not limited thereto.

For example, each component shown in Fig. 1 may be implemented in a distributed manner across multiple devices. The functional configuration of the information processing apparatus 10 according to the present embodiment may be flexibly modified depending on specifications, operations, and the like.

### <<1.2. Overview of functions>>

Next, an overview of the functions of the information processing apparatus 10 according to the present embodiment will be described.

In recent years, interfaces that allow adjustment of parameters such as the parameters of the image sensor 110 and the ISP 120 at the time of capturing images have become widespread.

However, for users who do not possess knowledge related to photography, it is difficult to adjust such parameters on their own.

Accordingly, technologies that provide suggestions for parameter adjustments or that automatically adjust parameters have also been developed.

However, the quality of an image is influenced by a user's perception and is not definitively determined. Therefore, with the aforementioned technologies, it may be difficult to adjust parameters according to the user's preferences.

Meanwhile, as disclosed in PTL 1, a technology has been proposed in which the parameters of a neural network performing image processing are controlled based on user instructions given via voice.

According to the technology disclosed in PTL 1, it becomes possible to obtain images that reflect the user's preferences.

However, it is conceivable that there may be environments where speech is not possible or users who do not wish to speak.

Furthermore, in the technology disclosed in PTL 1, it is required for the user to provide instructions from scratch. Moreover, there may be cases where it is difficult for the user to give appropriate instructions.

In addition, the technology disclosed in PTL 1 controls parameters related to post-processing performed by an image processing neural network, and it is difficult to control parameters related to image capturing conditions, that is, it is difficult to change the image capturing conditions.

The technical concept of the present disclosure has been conceived in view of the aforementioned points, and enables easier realization of image capturing and transformation (editing) according to the user's preferences.

Fig. 2 is a diagram for describing an overview of the functions of the information processing apparatus 10 according to the present embodiment.

As shown in Fig. 2, an image P1 captured by the image sensor 110 and processed by the ISP 120 is input to the image analysis unit 130.

The image analysis unit 130 according to the present embodiment may function as a caption generation unit that analyzes the image P1 and outputs a caption corresponding to the image P1.

Here, a feature of the caption according to the present embodiment is that it includes at least one text element that describes the image P1.

The text elements may include words and alphabetic characters.

The correction suggestion unit 140 according to the present embodiment may function as an attribution unit that adds text elements corresponding to the scene of the image P1 to the caption generated by the image analysis unit 130.

The interface control unit 160 according to the present embodiment presents the caption that has undergone the above processing to the user via the interface 165, and collects user's feedback related to the caption.

The feedback may include, for example, approvals, changes, additions, and deletions of the caption.

The parameter control unit 150 according to the present embodiment controls the parameters of the image sensor 110 and the ISP 120 based on the feedback collected as described above.

As described above, the information processing apparatus 10 according to the present embodiment performs generation and presentation of correction suggestions including captions, collection of user's feedback, and parameter control based on the feedback.

The functions of the information processing apparatus 10 according to the present embodiment will now be described in further detail.

### <<1.3. Correction suggestions>>

First, the correction suggestions according to the present embodiment will be described in detail with reference to Fig. 3.

The correction suggestion unit 140 according to the present embodiment may include, for example, a caption generation model 142 that outputs a caption based on the input image P1.

Hereinafter, the caption output by the caption generation model 142 is referred to as an original caption 210.

The original caption 210 is a description of the overall region, partial region, or subject of the image P1, such as "A photo of a coast under blue sky."

The correction suggestion unit 140 according to the present embodiment may further include an attribution module 144 that adds text elements corresponding to the scene to the original caption 210.

Hereinafter, the caption to which the scene-dependent text elements have been added by the attribution module 144 is referred to as an attribution caption 220.

The scene-dependent text elements may include, for example, adverbs or adjectives. For example, in the example shown in Fig. 3, the attribution module 144 adds the adjective "bright" to the noun "photo" and the adjective "white" to the noun "coast" included in the original caption 210.

The scene-dependent text elements may also be used to modify the intensity of expressions. The attribution module 144 may, for example, add "very" to "bright" included in the original caption 210 to generate a corrected expression "very bright."

In addition, the scene-dependent text elements may modify the overall impression of the image P1. For instance, the attribution module 144 may add "Japanese-style" to "townscape" included in the original caption 210 to generate a corrected expression "Japanese-style townscape."

Furthermore, the attribution module 144 may output, together with the added text elements, default values representing the degree of contribution of each text element to parameter control. These default values are suggestions to the user and enable automatic optimization of imaging parameters according to the scene, even without user adjustments.

In the example shown in Fig. 3, the attribution module 144 outputs a default contribution value of 0.4 for "bright" and 0.8 for "white."

The interface control unit 160 according to the present embodiment presents the correction suggestions to the user via the interface 165, based on the attribution caption 220 generated as described above.

In the example shown in Fig. 3, the interface 165 displays the sentence "brightness of the photo" along with an indicator corresponding to the sentence. The default value of the indicator is 0.4, which is the default contribution value for "bright" output by the attribution module 144.

By operating the above indicator, the user can adjust the overall brightness of the image P1.

In the example shown in Fig. 3, the interface 165 also displays the sentence "whiteness of the coast" along with an indicator corresponding to the sentence. The default value of this indicator is 0.8, which is the default contribution value for "white" output by the attribution module 144.

By operating the above indicator, the user can adjust the degree of whiteness of the coast included as a subject in the image P1.

The correction suggestions according to the present embodiment have been described above. As a method for realizing the attribution of adjectives and the like described above, one possible approach is to predefine adjectives to be suggested for each attribute of a noun or object. In this case, adjectives are predetermined, for example, florid for nouns referring to people, or beautiful for nouns referring to flowers, and when a corresponding noun appears in a caption, the relevant adjective can be suggested to be added. Alternatively, another method may involve using a pretrained natural language model to infer, either in advance or online, appropriate adjectives or similar modifiers to be added to nouns.

### <<1.4. Parameter control>>

Next, parameter control by the parameter control unit 150 according to the present embodiment will be described.

The parameter control unit 150 according to the present embodiment controls various parameters based on the user's feedback on the correction suggestions, including captions, displayed on the interface 165.

Here, the case where the user approves the presented correction suggestion will be described. Other types of user's feedback will be discussed separately.

The parameter control unit 150 according to the present embodiment may perform parameter control based on estimation by a machine learning model.

Fig. 4 is a diagram for explaining parameter control based on estimation by a machine learning model according to the present embodiment.

In the example shown in Fig. 4, the parameter control unit 150 includes a controller 151, a text encoder 152, and an image encoder 153.

When the user approves the presented correction suggestion, at least the feature quantities extracted from the attribution caption 220 by the text encoder 152 are input to the controller 151.

The controller 151 may be a machine learning model, such as a neural network, trained to estimate parameters capable of generating an image P1 having the characteristics indicated by the text, such as the attribution caption 220.

Based on the feature quantities of the input attribution caption 220 or the like, the controller 151 outputs parameter correction amounts or updated parameter values for the image sensor 110 and the ISP 120.

The controller 151 may also be input with feature quantities extracted from the image P1 by the image encoder 153, feature quantities extracted from the original caption 210 by the text encoder 152, and intermediate feature quantities from the caption generation model 142.

As described above, the controller 151 makes it possible to obtain the image P1 having the characteristics indicated by the text, such as the attribution caption 220.

Meanwhile, as shown in Fig. 5, the parameter control unit 150 according to the present embodiment may include an optimization module 154 instead of the controller 151.

The optimization module 154 is configured to perform parameter control using optimization methods such as evolutionary computation that do not rely on gradients, or using gradient-based methods.

In parameter control using the optimization module 154, an iterative process is executed in which parameter correction amounts or updated parameter values are gradually modified so that the feature quantities of the image P1 and the feature quantities of the attribution caption 220 become similar.

The optimization module 154 may also be input with the feature quantities of the original caption 210.

The similarity between the feature quantities of the image P1 and the feature quantities of the attribution caption 220 may be determined based on, for example, the L1 (Manhattan) distance, L2 (Euclidean) distance, or the like.

Further, the similarity between the feature quantities of the target text, such as the attribution caption 220, and the feature quantities of the image P1 may be obtained relatively based on the similarity between the feature quantities of the image P1 and the feature quantities of non-target texts, using softmax or similar technologies, for example.

The feature quantities of the image P1 may also be compared with the feature quantities of an image obtained by inputting the feature quantities of a target text, such as the attribution caption 220, into an image generator. In this case, conditioning is performed between the image P1 and the above image generator.

Alternatively, the similarity between the feature quantities of the target text, such as the attribution caption 220, and the feature quantities of the image P1 may be determined based on human evaluation.

The control using the caption generation model 142 and the attribution module 144 according to the present embodiment has been described above. On the other hand, the information processing apparatus 10 according to the present embodiment may also perform correction suggestion and parameter control without using the caption generation model 142 and the attribution module 144.

Fig. 6 is a diagram for explaining correction suggestions using an image analysis deep neural network (DNN) 146 and a text decoder 148 according to the present embodiment.

As shown in Fig. 6, the functions of the caption generation model 142 and the attribution module 144 described above may be replaced by a simpler image analysis DNN 146 and a text decoder 148 through knowledge distillation, or by a DNN that directly outputs correction suggestions from the image P1.

When the user approves the presented correction suggestion, as shown in Fig. 7, the controller 151 is at least input with the feature quantities extracted from the contents displayed on the interface 165 and the feature quantities extracted from the image P1 by the image analysis DNN 146.

The controller 151 outputs parameter correction amounts or updated parameter values for the image sensor 110 and the ISP 120 based on the input feature quantities described above.

The controller 151 may also be input with the feature quantities extracted from the output of the text decoder 148 by the text encoder 152, and the feature quantities extracted from the image P1 by the image encoder 153.

The correction suggestions and parameter control according to the present embodiment have been described above with reference to examples. Here, a supplementary explanation is provided regarding the training method for realizing the parameter control described above.

One training method for a parameter controller involves preparing sets of images, captions, and correct parameters, and training the parameter controller to output the correct parameters. However, preparing a large number of such sets requires considerable effort.

Therefore, a training method is implemented that uses an existing pretrained vision-language model to train the parameter controller without the need to prepare a dedicated dataset. The following describes an example in which a pretrained vision-language model, such as Contrastive Language-Image Pre-training (CLIP), is used in conjunction with the pretrained caption generation model 142 to train the controller 151.

Fig. 8 is a diagram for explaining training of the controller 151 using a pretrained CLIP model and the caption generation model 142 according to the present embodiment.

In the example shown in Fig. 8, the ISP 120 processes an image P11 captured by the image sensor 110 and outputs an image P12.

The image P12 is input to the image encoder 153 along with a plurality of images P13 obtained by applying data augmentation to the image P11.

The caption generation model 142 generates an original caption 210 based on the image P12.

Prompt engineering is applied to the original caption 210, for example, by automatically attributing adjectives to nouns, thereby generating the attribution caption 220.

The generated attribution caption 220 is input to the text encoder 152.

The original caption 210 and the attribution caption 220 are also input to the controller 151.

The controller 151 is trained so that, when the attribution caption 220 is input, the image P12 output by the ISP 120 becomes a more florid image than the image P11 and the images P13.

Here, how well the controller 151 can control the parameters depends on how well the pretrained CLIP model understands the language and images, particularly how well it captures the meanings of adjectives.

However, there may be cases in which the CLIP model does not capture detailed aspects, such as the specific degree of color tone or brightness required to be described as a "florid woman."

Accordingly, a method for training the CLIP model to learn adjective prompts such as "florid woman" or "beautiful flowers" will be described with reference to Fig. 9.

In this case, an original text 240 and an attributed text 250, in which a target adjective is added to the original text 240, are prepared.

Additionally, a small number of images P14 serving as positive examples (ground truth) corresponding to the attributed text 250, along with a sufficient number of data augmented images P13, are also prepared.

The prepared original text 240 and attributed text 250 are input to the text encoder 152, and the images P14 and P13 are input to the image encoder 153, thereby performing additional training (fine-tuning) of the CLIP model.

### <1.5. Feedback>

Next, user's feedback according to the present embodiment will be described in detail. As described above, correction suggestions according to the present embodiment are presented to the user via the interface 165. The user inputs feedback on the correction suggestions using the interface 165.

The user's feedback according to the present embodiment may include not only approval of the captions but also changes, additions, and deletions of the captions.

Fig. 10 is a diagram for explaining the changes, additions, and deletions of captions according to the present embodiment.

The upper part of Fig. 10 illustrates examples of correction suggestions displayed on the interface 165 based on the attribution caption.

In this case, as shown in the lower part of Fig. 10, the user may perform corrections, additions, and deletions of the text included in the correction suggestions displayed on the interface 165.

In the example shown in the lower part of Fig. 10, the user performs a correction from "brightness" to "sharpness," a deletion of "whiteness of the coast," and an addition of "nostalgicness of the blue sky."

The correction suggestion unit 140 receives information regarding such feedback from the interface control unit 160 and generates a feedback caption 230 in which the user's feedback is reflected in the attribution caption 220 based on that information.

The feedback caption 230 generated as described above is input to the text encoder 152.

The text encoder 152 extracts feature quantities of the feedback caption 230. These feature quantities are input to the controller 151, and parameter control as described above is carried out.

According to the configuration described above, the user can easily obtain an image that suits his/her preferences using natural language.

Note that the user may also perform feedback by directly modifying the original caption 210 using the interface 165.

Such feedback is particularly effective when the original caption 210 has low accuracy.

Additionally, user's feedback according to the present embodiment may include specification of the image region subject to parameter control.

Figs. 11 and 12 are diagrams for explaining feedback involving the specification of image regions subject to parameter control according to the present embodiment.

As shown in the upper left part of Fig. 11, the user may use the interface 165 to specify an image region within the image P1 that is subject to parameter control. In the example shown in Fig. 11, the user selects the region corresponding to the sky in the image P1 by a touch operation or the like and specifies it as "1."

The user may also provide feedback for a specified region, as shown in the upper right part of Fig. 11. In the example illustrated in Fig. 11, the user provides feedback on the brightness of region "1".

The correction suggestion unit 140 receives information regarding such feedback from the interface control unit 160 and generates a feedback caption 230.

Note that Fig. 11 also illustrates an example in which coarse locations on the image P1 are pre-registered and trained as language model IDs, and the feedback caption 230 is generated based on these IDs.

The text encoder 152 extracts feature quantities from the generated feedback caption 230. These feature quantities are input to the controller 151, and the parameter control as described above is carried out.

Meanwhile, as illustrated in Fig. 12, the correction suggestion unit 140 may generate a mask image M1 corresponding to region "1" and a feedback caption 230 corresponding to the mask image M1, based on the user's feedback.

The image encoder 153 extracts feature quantities of the image P1 and the generated mask image M1.

On the other hand, the text encoder 152 extracts feature quantities of the generated feedback caption 230.

The feature quantities of the image P1, mask image M1, and feedback caption 230 are input to the controller 151, and parameter control as described above is performed.

Next, feedback involving the changes in contribution degrees of text elements included in the caption according to the present embodiment will be described with reference to Fig. 13.

As illustrated in the upper right part of Fig. 13, the user may modify the contribution degrees of text elements in the caption by dragging indicators displayed on the interface 165 to the left or right, for example.

In the example shown in Fig. 13, the user provides feedback by changing the contribution degree of "bright" to 0.5 and that of "white" to 0.5.

The correction suggestion unit 140 receives information regarding such feedback from the interface control unit 160 and generates a feedback caption 230 in which the text elements are associated with their respective contribution degrees.

The text encoder 152 extracts feature quantities from the feedback caption 230 generated as described above. These feature quantities are input to the controller 151, and parameter control as described above is carried out.

In other words, the parameter control unit 150 according to the present embodiment may control parameters based on the feature quantities extracted from the caption in which feedback-reflecting contribution degrees are associated.

Note that the contribution degrees reflecting such feedback may be applied to the encoded caption data as an attention map.

Additionally, the parameter control unit 150 may perform interpolation among the extracted feature quantities, updated parameter values, or images output from the ISP 120.

Fig. 14 is a diagram for explaining the interpolation of feature quantities according to the present embodiment.

In the example shown in Fig. 14, the text encoder 152 is input with texts such as "A photo of a coast under blue sky," "A bright photo of a coast under blue sky," and "A photo of a white coast under blue sky," and extracts respective feature quantities.

The extracted feature quantities are combined after being subjected to a computation based on indicator values, and the results are input to the controller 151.

Note that the parameter control unit 150 may interpolate the feature quantities after combining the feature quantities extracted by the image encoder 153 and the feature quantities extracted by the text encoder 152.

Feedback when using the caption generation model 142 has been described.

On the other hand, as described above, the information processing apparatus 10 according to the present embodiment may include a simpler image analysis DNN 146 and a text decoder 148 via knowledge distillation.

Even in such a case, parameter control equivalent to that based on feedback using the caption generation model 142 can be realized, except for feedback involving corrections of the original caption 210.

When the information processing apparatus 10 according to the present embodiment includes the image analysis DNN 146 and the text decoder 148, the text encoder 152 may receive, as input, [void] and the text itself displayed on the interface 165, as shown in Fig. 15.

The extracted feature quantities are combined after being subjected to a computation based on indicator values, and the results are input to the controller 151.

Meanwhile, as shown in Fig. 16, the controller 151 may receive corrected feature quantities determined based on the presence or absence of adjectives and the like in the text displayed on the interface 165, along with the feature quantities extracted by the image encoder 153.

In this case, the controller 151 can determine default parameters based on the feature quantities extracted by the image encoder 153 and correct the parameters based on the above-mentioned corrected feature quantities.

Additionally, when the information processing apparatus 10 includes the optimization module 154 that performs parameter control using optimization methods such as evolutionary computation that do not rely on gradients, or using gradient-based methods, the information processing apparatus 10 may present images generated in the course of the iteration process to the user and carry out parameter control based on the image selected by the user.

Fig. 17 is a diagram for explaining the presentation of images generated during the iteration process and parameter control based on the selected image.

Image P20 shown in Fig. 17 is an image obtained using the original parameters. Image P21 is an image obtained using intermediate optimization parameters generated during the iteration process. Image P22 is an image obtained using optimized parameters obtained as a result of the iteration process.

Images P19 and P23 are images obtained using extrapolated parameters based on the original parameters and the optimized parameters obtained as a result of the iteration process.

The interface control unit 160 presents such multiple images to the user via the interface 165 and collects user's feedback, that is, the user's image selection results.

According to the above control, it becomes possible to easily acquire images that reflect the user's preferences.

### <<1.6. Modifications>>

Next, modifications according to the present embodiment will be described.

In the above, a case in which the original caption 210 is generated by the caption generation model 142, and a correction suggestion is made based on the original caption 210 has been described as a main example.

On the other hand, the caption according to the present embodiment may be input by the user.

The information processing apparatus 10 according to the present embodiment may also perform parameter control based on more direct instructions from the user.

Fig. 18 is a diagram for explaining training of parameter control based on direct instructions according to the present embodiment. For such training, a pretrained CLIP model, for example, can be used.

An instruction text 260 input by the user via the interface 165 is combined with the original caption 210, and a composite text 270 is generated. The generated composite text 270 is input to the text encoder 152.

Additionally, the instruction text 260 is input to the controller 151 together with the image P11 captured by the image sensor 110.

When the instruction text 260 is input, the controller 151 performs training so that the image P12 output by the ISP 120 becomes an image having the characteristics of the instruction text 260.

The parameter control based on the instruction text 260 has been described.

Additionally, for example, the information processing apparatus 10 is capable of performing automatic parameter control that does not rely on user's feedback. In such cases, the information processing apparatus 10 can learn from user history and other data to automatically estimate parameters based on extracted image feature quantities, the generated original caption 210, intermediate feature quantities, and the like.

Furthermore, the information processing apparatus 10 can acquire highly rated similar images from the Internet or a database and generate captions from the similar images. In such cases, an effect of parameter control that imitates the characteristics of the highly rated similar images can be expected.

Moreover, for example, the caption generation model 142 according to the present embodiment may be a model capable of performing Dense Captioning. Fig. 19 is a diagram for explaining the generation of the original caption 210 via Dense Captioning according to the present embodiment.

As shown in Fig. 19, the caption generation model 142 can generate original captions 210 that include more detailed descriptions of each object included in the image P1.

Fig. 20 is a diagram for explaining feedback using Dense Captioning.

The user selects an object in the image P1 displayed on interface 165 via a touch operation or other methods when dissatisfied with the appearance of the object.

Based on the above selection, the user may provide feedback such as modifications, additions, or deletion of the wording of the text displayed on the interface 165 as well as adjustment of indicators.

The correction suggestion unit 140 receives the feedback information from the interface control unit 160 and generates a feedback caption 230 based on this information, which is then input to the text encoder 152.

Additionally, for example, the feedback information related to the user's feedback may be stored in the storage unit 190 in association with the parameters obtained as a result of the feedback.

In this case, parameters used in the past can be transferred to similar images. For instance, if feedback on the blueness of the sky was previously provided, parameters associated with the feedback can be applied to images that include the sky as an object.

Additionally, such parameters may be personalized for each user or shared and averaged across users.

Moreover, by associating user's feedback information with the parameters obtained as a result of the feedback, it becomes easy to create a user's original capturing parameter set or image transformation parameter set. The created sets may be shared or sold among users.

The case where the parameter according to the present embodiment is a parameter related to an image has been described. However, the technical concept according to the first embodiment of the present disclosure is also applicable to parameter control related to sound.

Fig. 21 is a diagram for explaining the functional configuration example when performing parameter control related to sound according to the present embodiment.

When performing sound-related parameter control, the information processing apparatus 10 includes, as shown in Fig. 21, a microphone 310, a preprocessing unit 320, and a sound analysis unit 330.

The microphone 310 is a sensor that collects sound.

The preprocessing unit 320 is a processor that processes the sound collected by the microphone 310. The preprocessing unit 320 may include a neural network.

The sound analysis unit 330 analyzes the sound data MD1 processed by the preprocessing unit 320. The sound analysis unit 330 may output a caption for the sound data MD1.

The correction suggestion unit 140 and the interface control unit 160 may perform the same processing as in the case of parameter control related to images.

The parameter control unit 150 performs parameter control of the microphone 310 and the preprocessing unit 320 instead of the image sensor 110 and the ISP 120.

As explained above, the processing according to the present embodiment can be modified flexibly.

### <2. Second embodiment>

### <<2.1. Overview>>

Next, the second embodiment of the present disclosure will be described.

Recently, content generation using Generative AI has been gaining attention.

For example, image generation AI can generate new images based on both or either of input images and text or other conditioning data.

Fig. 22 is a diagram for explaining the overview of image generation using a generative model 500.

The generative model 500 is a type of generative AI that generates new images based on learned images.

In Fig. 22, an example is shown where the generative model 500 is a diffusion model, but the generative model 500 may also be another generative adversarial network (GAN), variational autoencoder (VAE), flow-based model, and the like.

When the generative model 500 is a diffusion model, the generative model 500 receives, as input, a noise-added image P31 in which noise has been applied to the original image P30.

The generative model 500 generates a new generated image P32, which is different from the original image P30, by repeatedly denoising the input noise-added image P31.

Additionally, it is possible to input conditioning data into the generative model 500 at this stage.

Conditioning data refers to various types of data that conditions the generated image P32 generated by the generative model 500.

For example, the conditioning data may be text.

In the example shown in Fig. 22, the text such as "Akita inu," "Professional photo," and "bright" can be input to the generative model 500 along with the noise-added image P31 so that the generative model 500 generates a generated image P32 that reflects the characteristics of the text.

As explained above, according to the generative model 500, it is possible to obtain various generated images P32 from the original image P30 in accordance with the conditioning data.

However, the generated image P32 generated by the generative model 500 does not guarantee the physical properties such as composition of the original image P30.

Therefore, simply using the generative model 500, there is a possibility that the user may not obtain a desired image.

Next, the transformation of the image by the ISP 120 will be explained again.

Fig. 23 is a diagram for explaining the transformation of an image by the ISP 120.

The ISP 120 performs a process of transforming an input RAW image P33 into an RGB image P34 using set parameters.

Unlike the generated image P32 output by the generative model 500, the RGB image output by the ISP 120 maintains the physical properties such as the composition of the input image (RAW image P33).

As explained above, by adjusting the parameters of the ISP 120, it is possible to change the atmosphere, impression, and the like of the RGB image P34 (for example, to a "∘∘ style" or the like). However, since the RGB image P34 maintains the physical properties of the input image (RAW image P33), its expressiveness is more limited compared to the generated image P32.

Additionally, it is not self-evident how the parameters of the ISP 120 should be adjusted to obtain a preferred image.

The technical concept according to the second embodiment of the present disclosure has been conceived with the above points in mind, and enables easier realization of more diverse image transformations according to the user preferences.

Fig. 24 is a diagram for explaining the overview of the second embodiment of the present disclosure.

The parameter control unit 150 according to the second embodiment of the present disclosure controls the transformation of the RAW image P33 to the RGB image P34 by the ISP 120.

In the following, the RGB image P34 output by the ISP 120 is also referred to as an ISP output image P35.

Additionally, the parameter control unit 150 according to the present embodiment controls the generation of a generated image P32 based on the ISP output image P35 by the generative model 500.

The generative model 500 may generate the generated image P32 based on the ISP output image P35 along with various kinds of conditioning data. In this way, it is possible to generate a generated image P32 that maintains a certain degree of similarity with the ISP output image P35.

The generated image P32, output by the generative model 500, is presented to the user via the interface 165 controlled by the interface control unit 160.

The interface control unit 160 also collects user's feedback on the generated image P32 through the interface 165.

The user's feedback may, for example, involve the selection of a preferred generated image P32.

The parameter control unit 150 according to the present embodiment includes a parameter estimator 510 that estimates parameters related to the ISP 120 based on the user's feedback on the generated image P32.

The parameter control unit 150 according to the present embodiment also controls the image transformation by the ISP 120 using the parameters estimated by the parameter estimator 510.

With this series of processes, a new ISP output image P35n that has a similar atmosphere and impression to the generated image P32 preferred by the user can be obtained.

The parameter control unit 150 may repeatedly execute the control of the parameters related to the ISP 120 based on user's feedback on the generated image P32, as well as the control of the generation of the generated image P32 by the generative model 500.

More specifically, the parameter control unit 150 may repeatedly execute the control of the generation of the generated image P32 based on the ISP output image P35 and conditioning data by the generative model 500, the estimation of parameters based on user's feedback on the generated image P32, and the image transformation control using the estimated parameters.

By repeatedly executing the above processing, it becomes possible to obtain a new ISP output image P35n that better matches the user's preferences while maintaining the physical properties.

Furthermore, by repeatedly executing the above processing, it becomes possible to obtain a generated image P32 that is closer to the ISP output image in terms of physical properties.

The user may freely use the generated image P32 generated during the processing.

The overview of the second embodiment of the present disclosure has been explained.

### <<2.2. Functional configuration example>>

Next, the functional configuration example of the second embodiment of the present disclosure will be described. The following will mainly explain configurations that differ from the first embodiment, while detailed explanations of configurations common to the first embodiment will be omitted.

The basic configuration of the information processing apparatus 10 in the second embodiment of the present disclosure may be the same as the basic configuration of the information processing apparatus 10 in the first embodiment shown in Fig. 1. Therefore, detailed explanations are omitted.

Fig. 25 is a diagram for explaining differences in the functional configuration of the second embodiment of the present disclosure compared to the first embodiment.

In Fig. 4, Fig. 5, and Fig. 8, a configuration has been described in which the information processing apparatus 10 according to the first embodiment includes a text encoder 152, and in which the controller 151 or the optimization module 154 determines parameters based on the feature quantities extracted by the text encoder 152.

In the second embodiment of the present disclosure, the information processing apparatus 10 includes a parameter estimator 510 instead of the controller 151 or the optimization module 154.

Additionally, the information processing apparatus 10 according to the second embodiment may include a generative model 500 in addition to or instead of the text encoder.

The generative model 500 receives, as input, the ISP output image P35 along with conditioning data, noise, and other inputs.

Both the generated image P32 generated by the generative model 500 and the ISP output image P35 are input to a feature quantity extractor 520, which corresponds to an image analysis DNN 146, an image encoder 153, and other components.

The parameter estimator 510 according to the present embodiment estimates parameters related to the ISP 120 based on the feature quantities of the generated image P32 and the feature quantities of the ISP output image P35, which are extracted by the feature quantity extractor 520.

The feature quantities of the generated image P32 input to the parameter estimator 510 may be directly obtained from the generative model 500.

Moreover, the parameter estimator 510 may also receive feature quantities of the text used for conditioning.

### <<2.3. Parameter estimation>>

Next, the parameter estimation using the parameter estimator 510 according to the present embodiment will be described in detail.

The parameter estimator 510 according to the present embodiment may use an optimization algorithm 515, for example, to estimate the parameters related to the ISP 120 (hereinafter referred to as ISP parameters).

Fig. 26 is a diagram for explaining the estimation of ISP parameters using the optimization algorithm 515 according to the present embodiment.

The parameter control unit 150 according to the present embodiment first measures an index that represents the similarity or difference between the feature quantities of the ISP output image P35 extracted by feature quantity extractor 520a and the feature quantities of the generated image P32 extracted by feature quantity extractor 520b. This index may, for example, be a distance (loss).

Note that feature quantity extractors 520a and 520b may have the same (single) configuration.

The parameter control unit 150 inputs the measured index, such as the distance, into the parameter estimator 510.

The parameter estimator 510 estimates the ISP parameters based on the input index such as the distance using the optimization algorithm 515.

As the optimization algorithm 515, various gradient methods and search methods can be used.

In cases where there are multiple generated images P32, and distance is used as an index, the parameter control unit 150 may measure the distance between the feature quantities of the ISP output image P35 and the feature quantities of each of the multiple generated images P32 extracted by the feature quantity extractor 520b and may input the average distance, shortest distance, or the like to the parameter estimator 510.

On the other hand, the parameter estimator 510 according to the present embodiment may be constructed by training an inference model.

Fig. 27 is a diagram for explaining the estimation of ISP parameters based on the training of the inference model according to the present embodiment.

When estimating ISP parameters based on the training of the inference model, the parameter control unit 150 inputs the feature quantities of the RAW image P33 extracted by the feature quantity extractor 520a, and the feature quantities of the generated image P32 extracted by the feature quantity extractor 520b into the parameter estimator 510 which has been constructed by training the inference model.

The parameter estimator 510 estimates the ISP parameters based on the feature quantities of the input RAW image P33 and the generated image P32.

Note that the feature quantity extractors 520a and 520b may have the same (single) configuration, and the feature quantities of both the RAW image P33 and the generated image P32 may be extracted simultaneously based on the RAW image P33 and the generated image P32. On the other hand, the feature quantities of the generated image P32 input to the parameter estimator 510 may be replaced by the intermediate feature quantities in the generative model 500 or the intermediate processing information from the generative model 500. In this case, the feature quantity extractor 520b may not necessarily be required.

Additionally, multiple feature quantities extracted from multiple generated images P32 may be input to the parameter estimator 510.

In this case, when multiple generated images P32 generated using the same or similar conditioning data are used, an effect similar to ensemble learning can be obtained.

Since the generated images P32 generated by the generative model 500 have randomness, it is possible to obtain different images even when the same conditioning data is used.

For example, by using synonyms in the text (text prompt) as conditioning data, it is possible to obtain similar generated images P32.

On the other hand, by using contrasting text prompts such as "professional photo" and "amateur photo" to generate the images P32, it is also expected that the distinctive characteristics of each image will be highlighted.

Additionally, the conditioning data used to generate the generated image P32, as well as the feature quantities of the conditioning data, may also be input to the parameter estimator 510.

Next, with reference to Fig. 28, the control of the ISP parameter application region according to the present embodiment will be described.

The parameter control unit 150 according to the present embodiment may update only the ISP parameters corresponding to the regions of the ISP output image P35 corresponding to the partial regions of the generated image P32.

The partial region of the generated image P32 may, for example, correspond to the main subject of the image.

In this case, the feature quantity extractor 520a receives not only the RAW image P33 but also a mask image M33 in which the main subject in the RAW image P33 is masked. Similarly, the feature quantity extractor 520b receives the generated image P32 and a mask image M32 in which the main subject of the generated image P32 is masked.

The feature quantities extracted by the feature quantity extractor 520a and the feature quantities extracted by the feature quantity extractor 520b are input to the parameter estimator 510.

The parameter estimator 510 estimates the ISP parameter E1 based on the input feature quantities.

The parameter control unit 150 generates a spatially non-uniform new ISP parameter E3 based on the ISP parameters E1 estimated by the parameter estimator 510 and the current ISP parameters E2, and controls the ISP 120 to perform image transformation using the ISP parameter E3.

Through this series of processes, it is possible to apply new ISP parameters only to the desired regions.

Next, the training method for the parameter estimator 510 according to the present embodiment will be described.

The parameter estimator 510 according to the present embodiment may be constructed by performing contrastive learning so that the target generated image P32 (referred to as the target generated image) and the ISP output image P35 resemble each other.

Fig. 29 is a diagram for explaining contrastive learning according to the present embodiment.

In contrastive learning according to the present embodiment, the parameter estimator 510, for example, estimates ISP parameters based on the target generated image T32 and the RAW image P33.

The ISP 120 transforms the RAW image 33 using the ISP parameters estimated by the parameter estimator 510 and outputs the ISP output image P35.

The parameter estimator 510 according to the present embodiment is trained so that the similarity between the feature quantities of the ISP output image P35 and the feature quantities of the target generated image T32 are higher than the similarity between the feature quantities of the ISP output image P35 and the feature quantities of non-target generated images.

In this case, each of the similarities may be relativized using, for example, a softmax function.

Additionally, the similarity may be expressed using, for example, L1 (Manhattan) distance, L2 (Euclidean) distance, and the like.

On the other hand, the parameter estimator 510 according to the present embodiment may be constructed using Score Distillation.

Fig. 30 is a diagram for explaining the construction of the parameter estimator 510 using Score Distillation according to the present embodiment.

When the generative model 500 is a diffusion model, the process of generating the generated image P32 by the generative model 500 involves repeated execution of denoising.

Score Distillation is a method in which the noise level estimated during the execution of the denoising process is used as gradient information for training.

According to Score Distillation, it is possible to construct the parameter estimator 510 that can accurately estimate the ISP parameters required to obtain the ISP output image P35 that resembles the target generated image T32.

The training method of the parameter estimator 510 according to the present embodiment has been described. The training method described above is merely an example, and the training method for the parameter estimator 510 according to the present embodiment is not limited to such examples. The parameter estimator 510 may be constructed using other widely-used training methods from the field of machine learning.

### <<2.4. Conditioning of generative model 500>>

Next, the conditioning for the generation of the generated image P32 by the generative model 500 using the ISP output image P35 according to the present embodiment will be explained.

The conditioning using the noise-added image P31 according to the present embodiment will be explained.

Fig. 31 is a diagram for explaining the conditioning using the noise-added image P31 according to the present embodiment.

In this conditioning, the parameter control unit 150 first generates a noise-added image P31 by adding noise to the ISP output image P35.

The parameter control unit 150 inputs the generated noise-added image P31 and the conditioning data into the generative model 500.

The generative model 500 generates the generated image P32 by repeatedly performing denoising on the noise-added image P31.

In the series of processes described above, by adjusting the intensity of the noise added to the noise-added image P31, the influence of the ISP output image P35 can be adjusted.

The parameter control unit 150 may, for example, decrease the noise as the loop for estimating ISP parameters and generating the image P32 progresses.

Additionally, the noise may be adjusted based on user's feedback.

For example, the parameter control unit 150 may adjust the noise based on the degree of variation in the generated image P32 that the user desires.

Alternatively, the parameter control unit 150 may adjust the noise based on the degree of user satisfaction with the generated image P32 presented.

Specific examples of user's feedback according to the present embodiment will be described later.

Next, more detailed explanation of the conditioning data according to the present embodiment will be provided.

Fig. 32 is a diagram for explaining the conditioning of the generative model 500 using the conditioning data according to the present embodiment.

In the above, the conditioning data according to the present embodiment was mainly described as a text prompt, but the conditioning data according to the present embodiment is not limited to such an example.

The conditioning data according to the present embodiment may include, for example, feature quantities of the ISP output image P35 extracted by the feature quantity extractor 520.

In this case, by changing the level of detail (resolution) of the feature quantities input into the generative model 500, the influence of the ISP output image P35, that is, the degree to which it follows the physical properties of the ISP output image P35, can be adjusted.

Additionally, in this case, the generative model 500 may receive, as input, a noise image P36 composed solely of noise, or a noise-added image P31.

Furthermore, the conditioning data according to the present embodiment may include statistical information, metadata, and the like.

For example, the conditioning data according to the present embodiment may include statistical quantities such as a color histogram.

Additionally, the conditioning data according to the present embodiment may include edge information. Edge information is useful when it is desired to obtain a generated image P32 that maintains the composition of the ISP output image.

Furthermore, the conditioning data according to the present embodiment may include a rough spatial color distribution. The spatial color distribution is useful when it is desired to obtain a generated image P32 that maintains the color tone of the ISP output image.

Additionally, the conditioning data according to the present embodiment may include mask images, segmentation information, and the like. These are useful when it is desired to specify regions in the image to be modified.

Specific examples of the conditioning data according to the present embodiment have been described.

The strength of the conditioning using such conditioning data may be adjusted using methods like Classifier Free Guidance (CFG).

CFG is a method where the difference between the output of the generative model 500 when the conditioning data is input and the output when no conditioning data is input is calculated as a vector in the direction that emphasizes the conditioning, and the conditioning regulation strength is then adjusted based on this vector.

The parameter control unit 150 according to the present embodiment may perform the adjustment using CFG based on user's feedback.

### <<2.5. Interface examples>>

Next, specific examples of the interface 165 according to the present embodiment will be explained.

Fig. 33 and Fig. 34 show examples of the interface 165 controlled by the interface control unit 160 according to the present embodiment.

In the example shown in Fig. 33, the interface 165 displays the ISP output image P35 and multiple generated images P32.

For example, the user may select a preferred generated image P32 from the displayed multiple generated images P32 and press a button B1 to issue an instruction to generate a new generated image P32 similar to the selected generated image P32. In Fig. 33, the selected generated image P32 is shown with a dashed line.

Additionally, for example, the user may adjust the indicator I1 to issue an instruction to adjust the diversity of the generated images P32.

The indicator I1 may correspond to the vector associated with CFG described above.

Furthermore, the user may input arbitrary text into the field F1 to issue an instruction to generate a generated image P32 using the input text as a text prompt.

Additionally, the user may adjust the conditioning regulation strength based on specific conditioning data using indicators, tone curves, and the like.

Additionally, as shown in Fig. 34, the user may, for example, select any region in either or both the ISP output image P35 and the generated image P32 to instruct the regeneration of only the selected region, or to specify a region to match.

The interface control unit 160 according to the present embodiment acquires information (feedback) regarding the instructions mentioned above and inputs the acquired information into the parameter control unit 150.

The parameter control unit 150, based on the input information, will regenerate the generated image P32 and ISP output image P35 and input the regenerated image P32 and ISP output image P35 to the interface control unit 160.

The interface control unit 160 then displays the newly input generated image P32 and ISP output image P35 on the interface 165.

Next, the fine-tuning of the generative model 500 and the registration of modes according to the user's preferences will be described.

By repeatedly performing parameter control based on user's feedback as described above, it is expected that multiple generated images P32 matching the user's preferences will be accumulated.

The user may specify several generated images P32 (or other images, such as ISP output images P35) that have a similar style and instruct the fine-tuning to generate new generated images P32 similar to the specified ones.

Fig. 35 is a diagram for explaining the interface 165 related to the fine-tuning according to the present embodiment.

For example, the user specifies several generated images P32 with a similar style in the interface 165, enters the name of the mode to be registered in the field F2, and presses a button B2.

When the button B2 is pressed, the parameter control unit 150 executes fine-tuning to generate images similar to the selected generated images P32.

In the present embodiment, fine-tuning may be performed using LoRA (Low-Rank Adaptation).

LoRA is a tuning method targeting some or all weight parameters used in large models, achieving high tuning accuracy with low computational cost.

The parameter control unit 150 may store the LoRA Weight 530, which is a set of weight parameters targeted in fine-tuning using LoRA, in association with the text (mode name) entered in field F2.

Thereafter, the user may issue an instruction for image generation using the LoRA Weight 530 associated with the selected mode name by selecting the mode name via the interface 165.

Thus, with the LoRA-based fine-tuning according to the present embodiment, multiple modes for generating images according to user preferences can be easily registered and recalled.

It should be noted that, while the above primarily described the case of obtaining a generated image P32 similar to the ISP output image 35, fine-tuning may also be performed to obtain a generated image P32 that is dissimilar to the ISP output image 35.

For example, the user may select an image featuring a husky as the subject and issue a fine-tuning instruction, thereby registering a mode for generating a generated image P32 featuring a husky from an ISP output image P35 featuring an Akita dog as the subject.

### <3. Hardware configuration example>

Next, a hardware configuration example of the information processing apparatus 90 according to an embodiment of the present disclosure will be described. Fig. 36 is a block diagram illustrating a hardware configuration example of an information processing apparatus 90 according to an embodiment of the present disclosure. The information processing apparatus 90 may be a device having the same hardware configuration as the information processing apparatus 10.

As illustrated in Fig. 36, the information processing apparatus 90 includes, for example, a processor 871, a ROM 872, a RAM 873, a host bus 874, a bridge 875, an external bus 876, an interface 877, an input device 878, an output device 879, a storage 880, a drive 881, a connection port 882, and a communication device 883. Note that the hardware configuration illustrated here is merely an example, and some of the constituent elements may be omitted. Components other than the components illustrated herein may be further included.

### (Processor 871)

The processor 871 functions as, for example, an arithmetic processing device or a control device, and controls all or some of the operations of the components on the basis of various types of programs recorded in the ROM 872, the RAM 873, the storage 880, or a removable storage medium 901.

### (ROM 872, RAM 873)

The ROM 872 is a means for storing programs loaded by the processor 871, data used for computations, and the like. Programs loaded by the processor 871, various types of parameters and the like that change as appropriate when executing the programs, and the like, for example, are stored in the RAM 873 temporarily or permanently.

### (Host Bus 874, Bridge 875, External Bus 876, Interface 877)

The processor 871, the ROM 872, and the RAM 873 are connected to each other by, for example, the host bus 874, which is capable of high-speed data transmission. Meanwhile, the host bus 874 is connected to the external bus 876, which has a relatively low data transmission speed, by the bridge 875, for example. The external bus 876 is connected to various constituent elements by the interface 877.

### (Input device 878)

For the input device 878, for example, a mouse, a keyboard, a touch panel, buttons, switches, levers, and the like are used. Furthermore, as the input device 878, a remote controller capable of transmitting a control signal using infrared rays or other radio waves may be used. The input device 878 includes an audio input device such as a microphone.

### (Output device 879)

The output device 879 is, for example, a device capable of notifying the user of acquired information visually or audibly, such as a display device such as a Cathode Ray Tube (CRT), an LCD, or an organic EL, an audio output device such as a speaker or a headphone, a printer, a mobile phone, a facsimile, or the like. The output device 879 according to the present disclosure also includes various vibration devices capable of outputting tactile stimuli.

### (Storage 880)

The storage 880 is a device for storing various types of data. As the storage 880, for example, a magnetic storage device such as a hard disk drive (HDD), a semiconductor storage device, an optical storage device, a magneto-optical storage device, or the like is used.

### (Drive 881)

The drive 881 is a device that reads information recorded on the removable storage medium 901 such as a magnetic disk, an optical disk, a magneto-optical disk, or a semiconductor memory, or writes information to the removable storage medium 901.

### (Removable storage medium 901)

The removable storage medium 901 is, for example, a DVD medium, a Blu-ray (registered trademark) medium, an HD DVD medium, various semiconductor storage media, or the like. Naturally, the removable storage medium 901 may be, for example, an IC card equipped with a non-contact type IC chip, an electronic device, or the like.

### (Connection port 882)

The connection port 882 is a port for connecting an external connection device 902 such as a Universal Serial Bus (USB) port, an IEEE1394 port, a Small Computer System Interface (SCSI), an RS-232C port, or an optical audio terminal.

### (External connection device 902)

The external connection device 902 is, for example, a printer, a portable music player, a digital camera, a digital video camera, an IC recorder, or the like.

### (Communication device 883)

The communication device 883 is a communication device for connecting to a network, and is, for example, a communication card for wired or wireless LAN, Bluetooth (registered trademark), or Wireless USB (WUSB), a router for optical communication, a router for Asymmetric Digital Subscriber Line (ADSL), or a modem for various communications.

### <4. Conclusion>

As explained above, the information processing apparatus 10 according to the first embodiment of the present disclosure includes the interface control unit 160 that collects user's feedback on the analysis results of the image, and the parameter control unit 150 that controls parameters related to at least one of image acquisition and transformation based on the user's feedback collected by the interface control unit 160.

According to the above configuration, it becomes possible to more easily realize image capturing and transformation according to the user's preferences.

Furthermore, the information processing apparatus 10 according to the second embodiment of the present disclosure includes the interface control unit 160 that collects user's feedback on the generated image P32 generated based on the ISP output image P35 output from the ISP 120 by the generative model 500, and the parameter control unit 150 that controls parameters related to the ISP 120 based on the user's feedback on the generated image P32.

According to the above configuration, it becomes possible to more easily realize more diverse image transformations according to the user's preferences.

Although preferred embodiments of the present disclosure have been described in detail thus far with reference to the accompanying drawings, the technical scope of the present disclosure is not limited to such examples. It will be apparent that those having ordinary knowledge in the technical field of the present disclosure can conceive of many variations or modifications within the scope of the technical spirit set forth in the claims, and these should naturally be understood as falling within the technical scope of the present disclosure.

The series of processing performed by each device described in the present disclosure may be implemented by a program stored in a non-transitory computer readable storage medium. Each program is, for example, read into a RAM when executed by a computer, and executed by a processor such as a CPU. The storage medium is, for example, a magnetic disk, an optical disk, a magneto-optical disk, or a flash memory. Further, the above computer program may be distributed via, for example, a network without using the storage medium.

Further, the effects described herein are merely explanatory or exemplary and are not intended as limiting. In other words, the technologies according to the present disclosure may exhibit other effects apparent to those skilled in the art from the description herein, in addition to or in place of the above effects.

The following configurations also fall within the technical scope of the present disclosure.
(1) An information processing apparatus including:
   a collection unit that collects user's feedback on an analysis result of an image; and
   a control unit that controls parameters related to at least one of acquisition and
   transformation of the image based on the user's feedback collected by the collection unit.
(2) The information processing apparatus according to (1), wherein
   the analysis result includes a caption, and
   the control unit controls the parameters related to at least one of the acquisition and transformation of the image based on the user's feedback on the caption.
(3) The information processing apparatus according to (2), wherein the control unit controls parameters related to at least one of a sensor and ISP based on the user's feedback on the caption.
(4) The information processing apparatus according to (2) or (3), wherein the user's feedback on the caption includes at least any of approval, change, addition, and deletion of the caption.
(5) The information processing apparatus according to (4), wherein the control unit controls the parameters based on feature quantities extracted from the caption reflecting the feedback.
(6) The information processing apparatus according to any one of (2) to (4), wherein the user's feedback on the caption includes a change in a contribution degree of text elements included in the caption.
(7) The information processing apparatus according to (6), wherein the control unit controls the parameters based on feature quantities extracted from the caption associated with the contribution degree reflecting the feedback.
(8) The information processing apparatus according to any one of (2) to (7), wherein the user's feedback on the caption includes a specification of an image region to be subjected to the control of the parameters.
(9) The information processing apparatus according to any one of (2) to (8), further including a caption generation unit that generates the caption.
(10) The information processing apparatus according to (9), further including an attribution unit that adds text elements corresponding to a scene of an image to the caption generated by the caption generation unit.
(11) The information processing apparatus according to any one of (2) to (10), wherein the collection unit controls an interface used for presenting the caption and inputting the user's feedback on the caption.
(12) The information processing apparatus according to any one of (2) to (11), wherein the caption is composed of at least one text element that describes an image.
(13) The information processing apparatus according to (3), further including the sensor and the ISP.
(14) The information processing apparatus according to (1), wherein
   the collection unit collects user's feedback on a generated image generated based on an ISP output image output from ISP by a generative model, and
   the control unit controls parameters related to the ISP based on the user's feedback on the generated image.
(15) The information processing apparatus according to (14), wherein the control unit controls the generation of the generated image based on the ISP output image and conditioning data by the generative model.
(16) The information processing apparatus according to (15), wherein the control unit repeatedly executes control of the parameters related to the ISP based on user's feedback on the generated image, and control of the generation of the generated image by the generative model.
(17) The information processing apparatus according to any one of (14) to (16), wherein the control unit estimates the parameters related to the ISP using a parameter estimator constructed through training of an inference model.
(18) The information processing apparatus according to (14), wherein the generative model includes a diffusion model.
(19) An information processing method for causing a processor to execute:
   collecting user's feedback on an analysis result of an image, and
   controlling parameters related to at least one of acquisition and transformation of the image based on the collected user's feedback.
(20) A program for causing a computer to function as an information processing apparatus including:
   a collection unit that collects user's feedback on an analysis result of an image; and
   a control unit that controls parameters related to at least one of acquisition and
   transformation of the image based on the user's feedback collected by the collection unit.
(21) An information processing apparatus including:
   a control unit that controls parameters related to an ISP based on user's feedback on a generated image generated based on an ISP output image output from the ISP by a generative model.

### [Reference Signs List]

- 10: Information processing apparatus
- 110: Image sensor
- 120: ISP
- 130: Image analysis unit
- 140: Correction suggestion unit
- 142: Caption generation model
- 144: Attribution module
- 146: Image analysis DNN
- 148: Text decoder
- 150: Parameter control unit
- 151: Controller
- 152: Text encoder
- 153: Image encoder
- 160: Interface control unit
- 165: Interface
- 170: Display unit
- 180: Operation reception unit
- 190: Storage unit
- 210: Original caption
- 220: Attribution caption
- 230: Feedback caption
- 500: Generative model
- 510: Parameter estimator
- 530: LoRA weight
- P32: Generated image
- P35: ISP output image

## Claims

1. An information processing apparatus comprising:
a collection unit that collects user's feedback on an analysis result of an image; and
a control unit that controls parameters related to at least one of acquisition and
transformation of the image based on the user's feedback collected by the collection unit.

2. The information processing apparatus according to claim 1, wherein
the analysis result includes a caption, and
the control unit controls the parameters related to at least one of the acquisition and
transformation of the image based on the user's feedback on the caption.

3. The information processing apparatus according to claim 2, wherein the control unit controls parameters related to at least one of a sensor and ISP based on the user's feedback on the caption.

4. The information processing apparatus according to claim 2, wherein the user's feedback on the caption includes at least any of approval, change, addition, and deletion of the caption.

5. The information processing apparatus according to claim 4, wherein the control unit controls the parameters based on feature quantities extracted from the caption reflecting the feedback.

6. The information processing apparatus according to claim 2, wherein the user's feedback on the caption includes a change in a contribution degree of text elements included in the caption.

7. The information processing apparatus according to claim 6, wherein the control unit controls the parameters based on feature quantities extracted from the caption associated with the contribution degree reflecting the feedback.

8. The information processing apparatus according to claim 2, wherein the user's feedback on the caption includes a specification of an image region to be subjected to the control of the parameters.

9. The information processing apparatus according to claim 2, further comprising a caption generation unit that generates the caption.

10. The information processing apparatus according to claim 9, further comprising an attribution unit that adds text elements corresponding to a scene of an image to the caption generated by the caption generation unit.

11. The information processing apparatus according to claim 2, wherein the collection unit controls an interface used for presenting the caption and inputting the user's feedback on the caption.

12. The information processing apparatus according to claim 2, wherein the caption is composed of at least one text element that describes an image.

13. The information processing apparatus according to claim 3, further comprising the sensor and the ISP.

14. The information processing apparatus according to claim 1, wherein
the collection unit collects user's feedback on a generated image generated based on an ISP output image output from ISP by a generative model, and
the control unit controls parameters related to the ISP based on the user's feedback on the generated image.

15. The information processing apparatus according to claim 14, wherein the control unit controls the generation of the generated image based on the ISP output image and conditioning data by the generative model.

16. The information processing apparatus according to claim 15, wherein the control unit repeatedly executes control of the parameters related to the ISP based on user's feedback on the generated image, and control of the generation of the generated image by the generative model.

17. The information processing apparatus according to claim 14, wherein the control unit estimates the parameters related to the ISP using a parameter estimator constructed through training of an inference model.

18. The information processing apparatus according to claim 14, wherein the generative model includes a diffusion model.

19. An information processing method for causing a processor to execute:
collecting user's feedback on an analysis result of an image, and
controlling parameters related to at least one of acquisition and transformation of the image based on the collected user's feedback.

20. A program for causing a computer to function as an information processing apparatus comprising:
a collection unit that collects user's feedback on an analysis result of an image; and
a control unit that controls parameters related to at least one of acquisition and
transformation of the image based on the user's feedback collected by the collection unit.
